# EUROPÄISCHE PATENTSCHRIFT

(11) **EP 2 848 398 B1**
(45) Veröffentlichungstag und Bekanntmachung des Hinweises auf die Patenterteilung: **09.03.2016**
(21) Anmeldenummer: 13004500.8
(22) Anmeldetag: 14.09.2013
(51) Int. Cl.: B30B 15/28, B21D 55/00, F16P 3/12, B21D 28/16, B21D 28/20, B21D 45/06

(54) **Vorrichtung und Verfahren zum Verhindern des Bruchs eines Werkzeug beim Feinschneiden und/oder Umformen eines Werkstücks**
Device and method for preventing a tool from breaking during fine cutting and/or forming a work piece
Dispositif et procédé destinés à empêcher la rupture d'un outil lors du coupage fin et/ou du déformage d'une pièce usinée

(43) Veröffentlichungstag der Anmeldung: 18.03.2015
(73) Patentinhaber: Feintool International Holding AG, 3250 Lyss (CH)
(72) Erfinder: Ochsenbein, Jürg, 3172 Niederwanden b. Bern (CH); Christofaro, Alfio, CH-8864 Reichenburg (CH); Honegger, Hans-Rudi, CH-8633 Wolfhausen (CH)
(74) Vertreter: Hannig, Wolf-Dieter

(56) Entgegenhaltungen:
- EP-A1- 2 258 496
- DE-B- 1 127 308
- DE-U1- 7 824 313
- GB-A- 1 128 285
- JP-B1- S4 937 228

## Beschreibung

Die Erfindung betrifft eine Vorrichtung zum Verhindern des Bruchs eines Werkzeugs beim Feinschneiden und/oder Umformen in einer Presse mit einem durch einen Antrieb angetriebenen, eine Hubbewegung zwischen OT und UT ausführenden Stößel und einem oberhalb des Stößels angeordneten Feinschneidkopf, der einen Hauptzylinder umfasst, in dem ein auf der Hubachse liegender Ringzackenkolben aufgenommen ist, dem mehrere koaxial zur Hubachse angeordnete Ringzackendruckbolzen zugeordnet sind, die in einer am Hauptzylinder befestigten Kopfplatte axial geführt sind und sich auf einer zur Kopfplatte gehörenden Ringzackendruckplatte abstützen, welche mit dem Ringzackenkolben und Ringzackendruckbolzen eine axial verschiebbare Anordnung für die Schneid-, Umform- und Abstreifoperation bildet, wobei der Feinschneidkopf mit einem Hydrauliksystem zum Erzeugen von auf das Werkzeug wirkende Drücke über durch einen Rechner ansteuerbare Ventile in Verbindung steht.

Die Erfindung betrifft des Weiteren ein Verfahren zum Verhindern des Bruchs eines Werkzeugs beim Feinschneiden und/oder Umformen in einer durch einen Antrieb über ein modifizierten Kniehebel angetriebenen Presse, bei dem die im Hauptzylinder und Kopfplatte des Feinschneidkopfes geführten Ringzackenkolben, Ringzackendruckbolzen und Ringzackendruckplatte zum Aufbringen einer Ringzackenkraft und Abstreifkraft mit einem regelbaren Druck aus einem Hydrauliksystem beaufschlagt werden, wobei die einzelnen Drücke über durch einen Rechner eingestellte Ventile angesteuert werden.

### Stand der Technik

Aus der DE 24 19 390 C2 ist eine Vorrichtung zum Schutz eines Werkzeugsatzes einer hydraulischen Feinstanzpresse bekannt, deren Stößel mit Schnellhub-Zylinder-Kolben-Einheiten und einer Arbeitshub-Druckeinheit anhebbar ist, bei welcher Presse zwischen Stößelantriebselement und einem getriebenen Stößelteil ein bei Annäherung durch ein Druckmittel mit geringer Kraft aufrecht erhaltbarer, bei größerer Druckbelastung der ihn bildenden Teile sich schließender Tastspalt besteht, dessen Zustand von einem Taster und durch einen Wegschalter solange überwachbar ist, bis der Stößel die Werkzeuge einander bis zum ordnungsgemäßen Beginn des Arbeitshubes genähert hat.
Der Tastspalt ist zwischen dem Stößel und den Stirnflächen der Kolbenstangen der Schnellhub-Kolben gebildet und die Druckmittelbeaufschlagung für den Tastspalt in Tastzylindern in dem Stößel erfolgt, deren Tastkolben jeweils gegen eine Teilfläche der vorgenannten Stirnflächen anliegen.
Bei dieser bekannten Schutzvorrichtung ist der Tastspalt vor der Schnellhub-Zylinder-Kolben-Einheit dem Stößel zugeordnet und diesem vorgeschaltet. Ein Ansprechen dieser Schutzvorrichtung erfolgt immer dann, wenn der Tastspalt sich infolge einer erhöhten Druckbelastung schließt.
Sie hat den Nachteil, dass Stanzabfälle, Teile oder Fremdkörper im Werkzeug nicht erfasst werden und somit Schäden im Werkzeug nicht verhindert werden können.

Eine andere bekannte Lösung (DE 69 17 177 U) für eine Werkzeugsicherung an Pressen zur Verarbeitung eines Rohlings offenbart zwischen einem ersten durch den Arbeitskolben bewegten Werkzeug und einem ständerfesten Werkzeug zwei in vorbestimmter Reihenfolge zu betätigende Schalter zur Unterbrechung des Arbeitshubes bei umgekehrter Betätigungsfolge. Es ist ein zum Anbringen des ersten Werkzeugs dienendes Organ axial verschiebbar in Bezug auf den Arbeitskolben vorgesehen, das beim Arbeitshub durch elastisch nachgiebige Mittel in einem kleinen Abstand vor dem Arbeitskolben gehalten wird. Ein erster auf die Sollhöhe des zu verarbeitenden Rohlings einstellbarer Endschalter wird durch einen Anschlag betätigt, wenn der Kolben einen durch die Einstellung des ersten Endschalters vorbestimmten Teil seines Arbeitshubes zurückgelegt hat. Ein zweiter Endschalter wird durch einen weiteren Anschlag betätigt, wenn das Organ durch Auftreffen des Rohlings oder eines Fremdkörpers auf das zweite Werkzeug um den kleinen Abstand auf den Kolben zurückgedrängt worden ist.
Das Organ ist als ein unterer Werkzeug-Aufspanntisch ausgeführt, der auf einem Zylinder ruht, der mit dem Arbeitskolben eine ringförmige Druckkammer einschließt, die an eine Druckmittelleitung angeschlossen ist, in deren Zuge sich ein Absperrorgan befindet, das gestattet, so viel Druckluft in die Ringkammer einzulassen, dass der Tisch sich beim Arbeitshub praktisch schwebend vor dem Kolben befindet. Bei dieser bekannten Lösung ist von Nachteil, dass neben dem hydraulischen System ein zweites separates System notwendig ist, das mit Druckluft arbeitet und somit einen erheblichen Schaltungs- und Konstruktionsaufwand nach sich zieht. Außerdem verbleibt nach der Erfassung eines Fremdkörpers keine Möglichkeit, die kinetische Energie des Antriebs abzubauen.

Der Stand der Technik, von dem in der vorliegenden Erfindung ausgegangen wird, ist in der EP 2 258 496 A1 beschrieben, welche eine Vorrichtung gemäß dem Oberbegriff des Anspruchs 1 und ein Verfahren zum Verhindern des Bruchs eines aus einem Ober- und Unterteil zusammengesetzten Werkzeuges beim Feinschneiden und/oder Umformen in einer Presse betrifft. Die bekannte Vorrichtung umfasst einen im Feinschneidkopf angeordneten Hauptzylinder, in dem ein auf der Hubachse liegender Ringzackenkolben und mehrere koaxial zur Hubachse angeordnete Ringzackenbolzen aufgenommen sind, die in einer den Hauptzylinder verschließenden Hauptplatte axial geführt sind und sich auf einer Ringzackendruckplatte abstützen, wobei der Hauptzylinder im Kopfstück der Presse gehalten und durch einen Ringzackendeckel druckdicht verschlossen ist, und wobei der Feinschneidkopf mit einem Hydrauliksystem zum Erzeugen von auf das Werkzeug wirkende Drücke über durch einen Rechner ansteuerbare Ventile in Verbindung steht.
Zwischen Ringzackenkolben und Ringzackenbolzen ist ein Tastkolben vorgesehen, der mit dem Ringzackenkolben einerseits und mit den Ringzackenbolzen und Ringzackendruckplatte andererseits eine axial verschiebbare Anordnung bildet, wobei dem Ringzackenkolben ein mit einem Vorspanndruck des Hydrauliksystems beaufschlagbarer Druckraum, zwischen Ringzackenkolben und Tastkolben ein mit einem Tastkolbendruck beaufschlagter Druckraum sowie dem Tastkolben ein weiterer mit einem Differentialdruck beaufschlagter Druckraum zugeordnet sind, von denen die Druckräume über je einen Anschluss im Ringzackendeckel mit dem Hydrauliksystem zur Beaufschlagung des Ringzackenkolbens und des Tastkolbens entgegen der Wirkrichtung des Vorspanndruckes verbunden sind.
Des Weiteren ist ein Tasttisch vorgesehen, der hängend entgegen eines an der Hauptplatte angreifenden Spannmittels in einem definierten Tastabstand gewichtskompensiert von der Hauptplatte gehalten ist, welchem Tastabstand ein Sensor zugeordnet ist, der bei Änderung des Tastabstandes ein Signal an den Rechner zum Sofortstopp der Presse für des Schutz des Werkzeugoberteils weiterleitet.
Dieser bekannte Stand der Technik hat den Nachteil, dass der Tasttisch ein zusätzliches Bauteil darstellt, das zu einer Erhöhung der zu bewegenden Masse und damit zu einer reduzierten Empfindlichkeit der Tastvorrichtung führt. Durch die Anordnung des Tasttisches unterhalb der Hauptplatte vergrößert sich außerdem der Abstand des Messpunktes zum Feststellen von Stanzabfällen, liegengebliebenen Teilen oder Fehleinstellungen in der Werkzeugeinbauhöhe zum oberen Totpunkt, wodurch sich eine höhere Stößelgeschwindigkeit ergibt, die jedoch die Empfindlichkeit des Tastvorganges herabsetzt.

### Aufgabenstellung

Bei diesem Stand der Technik liegt der Erfindung die Aufgabe zugrunde, eine verbesserte Lösung zum Verhindern des Bruchs eines Werkzeuges beim. Feinschneiden und/oder Umformen eines Werkstücks auf einer Presse bereitzustellen, deren Messpunkt näher an OT liegt, einen kurzen Tastweg aufweist und zugleich eine höhere Empfindlichkeit beim Tasten ermöglicht.

Diese Aufgabe wird durch eine Vorrichtung der eingangs genannten Art mit den Merkmalen des Anspruchs 1 und durch ein Verfahren mit den Merkmalen des Anspruchs 15 gelöst.

Vorteilhafte Ausgestaltungen der erfindungsgemäßen Vorrichtung und des Verfahrens sind den Unteransprüchen entnehmbar

Die erfindungsgemäße Lösung geht von der Erkenntnis aus, den Tastweg zum Erfassen von Stanzabfällen, Teilen, anderen Fremdkörpern oder Fehlstellungen in der Werkzeugeinbauhöhe in Abhängigkeit des Bremswegs anzupassen und die Tastfunktion direkt in der Druckplatte des Feinschneidkopfes vorzusehen, so dass ein separater Tasttisch entfallen kann.
Erreicht wird dies dadurch, dass die Kopfplatte mit hydraulischen Spannmitteln zum Halten und hydraulischen Führungsmitteln zum Führen einer an der Kopfplatte hängend angeordneten Wechselplatte versehen ist, die in einer unteren Endlage kraftlos zur Kopfplatte gehalten und in einer oberen Endlage kraftschlüssig mit der Kopfplatte in Abhängigkeit der Abstreifoperation des Stanzgitters von der Ringzackendruckplatte verbind- und wieder lösbar ist, wobei die Wechselplatte durch eine des Bewegung des Stößels von der unteren in die obere Endlage und durch Schwerkraft von der oberen in die untere Endlage überführbar ist, und dass zwischen Kopfplatte und Wechselplatte ein an den Bremsweg des Antriebs angepasster Tastabstand vorgesehen ist, dem eine in der Ringzackendruckplatte und Kopfplatte angeordnete Tasteinrichtung zugeordnet ist, welche über einen in der Kopfplatte angeordneten Sensor bei einer zeitlich verfrühten Bewegung einer in der Wechselplatte angeordneten Druckplatte ein Signal an den Rechner zum Stopp des Antriebs und Abschalten des Hydrauliksystems ausgibt.

Nach einer bevorzugten Ausgestaltung der Erfindung sind die hydraulischen Spannmittel durch jeweils separat in der Kopfplatte angeordnete Kanäle an eine gemeinsame Zuleitung angeschlossen die über ein durch den Rechner angesteuertes Ventil zum Spannen oder Lösen des Kraftschlusses zwischen Kopfplatte und Wechselplatte mit einer Hochdruckleitung des Hydrauliksystems des Feinschneidkopfes verbunden ist, wodurch gewährleistet ist, dass alle Spannmittel gleichzeitig gespannt oder gelöst werden können.
Durch den Einsatz der hydraulischen Spannmittel, welche bei jedem Stanzvorgang gespannt und wieder gelöst werden, kann ein hydraulische Tastkolben nach dem Stand der Technik entfallen.
Die hydraulischen Spannmittel sind einseitig wirkende Blockzylinder mit einem an den Tastabstand angepassten Hub und einem Spanndruck von 270 bar.

Nach einer weiteren bevorzugten Ausgestaltung der erfindungsgemäßen Vorrichtung sind die hydraulischen Führungsmittel durch separat in der Kopfplatte angeordnete Kanäle an eine gemeinsame Zuleitung angeschlossen, die über ein durch den Rechner angesteuertes Ventil zum Öffnen und Schließen mit einer Niederdruckleitung des Hydrauliksystem des Feinschneidkopfes verbunden ist.
Für die Aufnahme und Führung der Wechselplatte an der Kopfplatte besitzt die Wechselplatte Führungsmittel zum Stabilisieren der Wechselplatte in X- und Y-Richtung beim Leerhub in die obere Endlage und beim Rückfallen in die untere Endlage.
Durch diese Ausbildung ist in einfacher Weise sichergestellt, dass die Wechselplatte beim Leerhub seitlich nicht verrutschen kann.
Als hydraulische Führungsmittel haben sich Einschraubzylinder mit einem Betriebsdruck von etwa 60 bar und einem gegenüber dem Tastabstand wesentlich größeren Hubweg bewährt, so dass die Führung der Wechselplatte jederzeit gewährleistet ist.

Vorteilhaft ist ferner, dass die Wechselplatte eine Sandwichkonstruktion umfasst, deren Oberteil aus Stahl und deren Unterteil aus Aluminium besteht, wobei das Oberteil mit Nuten versehen ist, in die die Spannmittel der Kopfplatte eingreifen und das Unterteil Nuten zur Befestigung des Werkzeugoberteils aufweist. Die Sandwichkonstruktion ermöglicht eine leichtgewichtige Bauweise bei zugleich hoher Festigkeit und Stabilität des Oberteils für den Spannvorgang.

In einer weiteren vorteilhaften Ausgestaltung der Erfindung weist die Ringzackendruckplatte eine parallel zur Hubachse angeordnete Ausnehmung für die Aufnahme eines unter Federkraft stehenden Tastbolzens auf, welcher mit seinem einen Ende auf der Wechselplatte aufliegt und der Bewegung der Wechselplatte bei ihrem Leerhub folgt sowie an seinem anderen Ende zum Erfassen der Bewegung der Wechselplatte und der Ringzackendruckplatte eine Messscheibe trägt, der ein in einer horizontalen Ausnehmung der Kopfplatte angeordneter Sensor zugeordnet ist, welcher die von der Wechselplatte erzeugte Hubbewegung der Messscheibe in die obere Endlage der Wechselplatte detektiert und ein Signal an den Rechner zum Herstellen des Kraftschlusses zwischen Kopfplatte und Wechselplatte mittels Spannen der Spannmittel durch das Ansteuern des Ventils zum Zuschalten des Hochdrucks aus dem Hydrauliksystem ausgibt, wenn ein der oberen Endlage entsprechendes Abstandsmaß zwischen Messscheibe und Sensor erreicht ist, wobei der Kraftschluss zwischen Kopfplatte und Wechselplatte durch ein Signal des Sensors an den Rechner zum Abschalten des Hochdrucks aus dem Hydrauliksystem dann gelöst wird, sobald die Messscheibe bei ihrer Rückbewegung infolge des Abstreifvorgangs das Abstandsmaß wieder erreicht.

In einer zweckmäßigen weiteren Ausführung der Erfindung kommt ein berührungsloser Wegemesssensor, vorzugsweise ein induktiver Abstandssensor mit einem Messbereich von 4mm zum Einsatz, der die Positionen der Messscheibe erfasst, welche der Stellung der Wechselplatte bei ihrem Leerhub in die obere Endlage und bei ihrer Rückbewegung entspricht.
Es versteht sich, dass auch andere berührungslose Wegsensoren, beispielsweise kapazitive, magneto-restriktive, konfokal-chromatische Sensoren oder Wirbelstrom-Sensoren von der Erfindung erfasst sind.

Eine weitere bevorzugte Ausführungsform der erfindungsgemäßen Vorrichtung sieht vor, dass der Druckraum für den Hauptzylinder im Kopfstück des Feinschneidkopfes ausgebildet ist, der über einen Anschluss am Kopfstück an eine Druckleitung des Hydrauliksystems angeschlossen ist, wobei der Druckraum durch ein in der Druckleitung gelegenes, vom Rechner angesteuertes Ventil mit einem Vorspanndruck beaufschlagbar und zum Entspannen schaltbar ist.

Nach einer weiteren bevorzugten Ausgestaltungsform der Erfindung sind zum Erzeugen der Ringzackenkraft jeweils ein dem Ringzackenkolben zugeordneter erster Druckraum und/oder ein zweiter Druckraum und zum Erzeugen der Abstreifkraft der erste und zweite Druckraum vorgesehen, die in gleicher Richtung wirken, wobei die Druckräume für die Ringzackenkraft und Abstreifkraft jeweils durch einen im Hauptzylinder angeordneten Kanal und eine Zuleitung mit der Hochdruckleitung des Hydrauliksystems über ein in den Zuleitung gelegenes, vom Rechner angesteuertes Proportionalitätsventil verbunden ist.

In einer weiteren vorteilhaften Ausführungsform der erfindungsgemäßen Vorrichtung liegt der dem Ringzackenkolben zugeordnete Druckraum unterhalb des Druckraums des Hauptzylinders, so dass eine kompakte Bauweise des Kopfstückes möglich wird.

Zweckmäßig ist des Weiteren, dass die Kopfplatte durch achsparallele zur Hubachse in Bohrungen des Kopfstückes geführte Führungsbolzen verdrehsicher und mit dem Hauptzylinder axial verschiebbar angeordnet ist.

Die Aufgabe wird weiter dadurch gelöst, dass zwischen Kopfplatte und einer an der Kopfplatte kraftlos geführten Wechselplatte ein an den Bremsweg des Antriebes angepasster Tastabstand eingestellt wird, dessen Änderung durch eine stößelabhängige zeitlich verfrühte Bewegung einer in der Wechselplatte angeordneten Druckplatte von einer Tasteinrichtung und einen Sensor erfasst, in ein Signal gewandelt und an den Rechner zum Sofortstopp des Antriebs und Abschalten des Hydrauliksystems weitergeleitet wird.

Das erfindungsgemäße Verfahren läuft insbesondere in folgenden bevorzugten Schritten ab:
a) Erfassen der Position der Ringzackendruckplatte in einem unteren Endanschlag durch die einen unter Federkraft stehenden Tastbolzen, einen Sensor und eine Messscheibe umfassende Tasteinrichtung und Kalibrieren dieser Position als Nullpunkt im Rechner,
b) Ankoppeln der die Druckplatte enthaltenen Wechselplatte an die Ringzackendruckplatte tragende Kopfplatte, Andrücken des Tastbolzens auf die Druckplatte, Erfassen dieser Position als eine untere Endlage der Wechselplatte durch die Messscheibe und Übergabe dieser Position an den Rechner als Vergleichsposition,
c) Durchführen einer Hubbewegung der Wechselplatte aus der unteren Endlage in eine obere Endlage an der Kopfplatte durch den Stößel des Kniehebels,
d) Erfassen der Hubpositionen der Druckplatte während der Hubbewegung der Wechselplatte durch die Messscheibe und Abschalten des Antriebs und des Hydrauliksystems, wenn der Vergleich der von der Tasteinrichtung ermittelten aktuellen Position mit der Vergleichsposition nach Schritt b) durch den Rechner eine verfrühte Bewegung der Druckplatte ermittelt,
e) Erfassen der oberen Endlage der Wechselplatte durch die Messscheibe und Ausgabe eines Signals über den Sensor an den Rechner zum Zuschalten des Hydrauliksystems auf die hydraulischen Spannmittel der Kopfplatte, sofern von der Messscheibe keine verfrühte Bewegung der Druckplatte festgestellt wird,
f) Herstellen eines Kraftschlusses zwischen Kopfplatte und Wechselplatte in der oberen Endlage durch die hydraulischen Spannmittel an der Kopfplatte mittels eines Haltedruckes aus dem Hydrauliksystem und Verdrängen der Ringzackendruckplatte in Richtung OT,
g) Durchführen einer Druckbeaufschlagung des Ringzackenkolbens zum Abstreifen des Stanzgitters mit der Ringzackendruckplatte in Richtung UT ,
h) Halten von Kopfplatte und Wechselplatte im kraftschlüssigem Zustand bis die Messscheibe das Ende des Abstreifvorgangs detektiert und der Sensor ein Signal an den Rechner zum Lösen der Wechselplatte ausgibt,
i) Lösen des Kraftschlusses zwischen Kopfplatte und Wechselplatte durch Abschalten des auf die hydraulischen Spannmittel wirkenden Druckes des Hydrauliksystems über den Rechner und Zurückfallen der gelösten Wechselplatte durch die Schwerkraft in ihre untere Endlage und,
j) Wiederholen der Schrittfolgen a) bis c) und e) bis h), sofern die Tasteinrichtung keine verfrühte Bewegung der Wechselplatte nach Schritt d) detektiert kat.

In einer weiteren bevorzugten Ausgestaltung des erfindungsgemäßen Verfahrens ist vorgesehen, dass der Vorspanndruck für den Ringzackenkolben auf einen Hochdruck von etwa 60 bis 270 bar eingestellt wird.

Das erfindungsgemäße Verfahren sieht des Weiteren in bevorzugter Ausgestaltung vor, dass
- Abstreifdruck auf einen Niederdruck von etwa 60 bar,
- der Haltedruck für die Spannmittel auf einen Druck eingestellt wird, der eine Haltekraft erzeugt, welche deutlich über der Abstreifkraft liegt und
- der Druck für die Führungsmittel der Wechselplatte auf einen Niederdruck von etwa 60 bar
eingestellt wird.

Weitere Vorteile und Einzelheiten der Erfindung ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.
Es zeigt
Fig. 1 eine perspektivische Darstellung der Presse mit im Kopfstück der Presse montierter erfindungsgemäßer Vorrichtung,
Fig.2a und 2b perspektivische Detailansichten der Stößelanordnung und des Antriebs am Fuß der Presse,
Fig. 3 eine perspektivische Ansicht in Schnittdarstellung der erfindungsgemäßen Vorrichtung im kraftlos hängenden Zustand,
Fig. 4 einen Schnitt der erfindungsgemäßen Vorrichtung,
Fig. 5a eine perspektivische Darstellung der Kopfplatte in Unteransicht,
Fig. 5b eine schematische Darstellung der hydraulischen Spannmittel im Zusammenschluss,
Fig. 5c eine schematische Darstellung der hydraulischen Führungsmittel im Zusammenschluss,
Fig. 6 eine perspektivische Ansicht der Wechselplatte in Draufsicht und
Fig. 7a bis 7c eine Schnittdarstellung der Tast- und Sensoranordnung in der unteren und oberen Endlage sowie beim Abstreifvorgang.

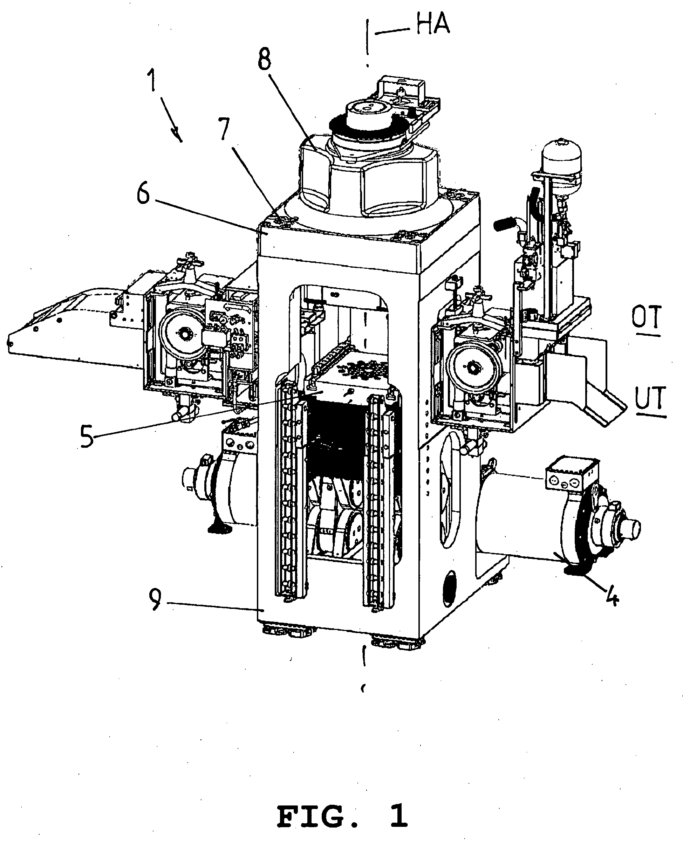

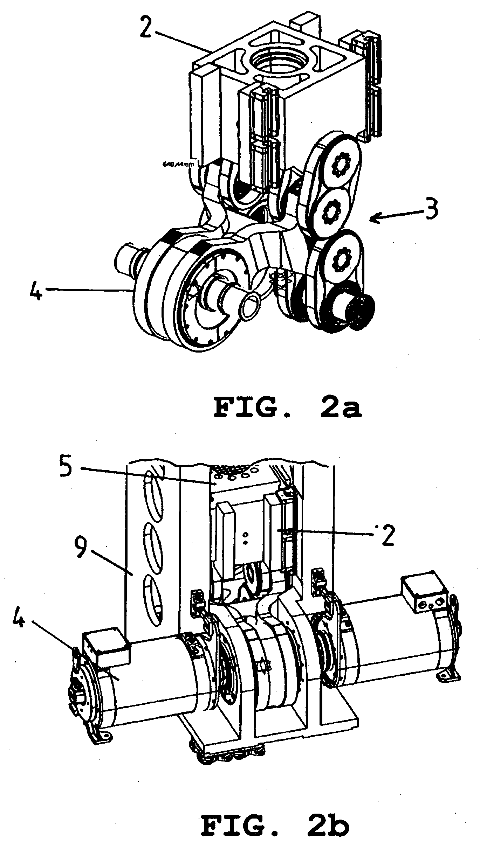

Die Fig. 1, 2a und 2b zeigen in perspektivischer Darstellung eine Feinschneidpresse 1 mit einem Stößel 2 und einem modifizierten Kniehebel 3, der von einem Antrieb 4 angetrieben wird. Der Stößel 2 trägt eine Tischplatte 5 und führt eine Hubbewegung auf der Hubachse HA in Richtung des Kopfstücks 6 der Presse 1 aus. Im Kopfstück 6 der Presse befindet sich der Feinschneidkopf 8, der in Flucht
zur Hubachse HA angeordnet ist. Das Kopfstücks 6 ist mit Spannschrauben 7 mit dem Pressenständer 9 kraftschlüssig verbunden.
Der Antrieb 4 ist so ausgelegt, dass er mit konstanter Motordrehzahl, variabler Motordrehzahl oder wechselnder Drehrichtung mit einem kurzen Bremsweg arbeitet, der für einen Sofortstopp zur Bruchsicherung des Werkzeugs Bedingung ist. Der Bremsweg des Antriebs liegt für den hier beispielsweise zum Einsatz kommenden Torquemotor im Bereich von 2 mm.
Der einseitige Pendelhub ermöglicht des Weiteren, den Antrieb bei offenem Werkzeug gezielt anzuhalten und die Öffnung des Werkzeugs frei zu wählen, so dass die Sicherheit beim Ausräumen des Werkzeugs steigt.

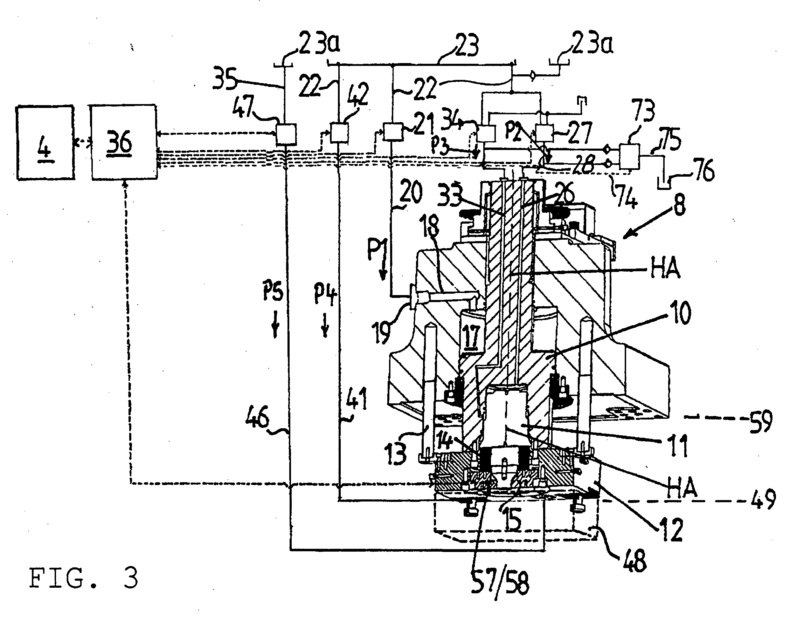

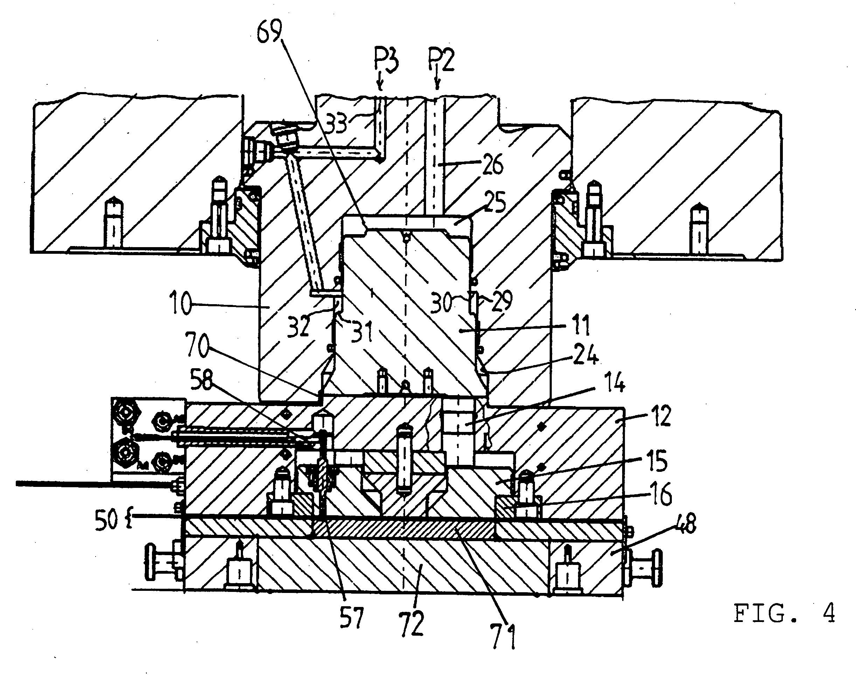

Die Fig. 3 und 4 zeigen die erfindungsgemäße Vorrichtung, die in den Feinschneidkopf 8 intergiert ist. Die erfindungsgemäße Vorrichtung umfasst einen zum Feinschneidkopf 8 gehörenden Hauptzylinder 10, der im Kopfstück 6 axial verschiebbar und arretierbar geführt ist, einen Ringzackenkolben 11, welcher seinerseits im Hauptzylinder 10 auf der Hubachse HA axial verschiebbar angeordnet ist, und eine am Hauptzylinder 10 stirnseitig befestigten Kopfplatte 12, welche am Kopfstück 6 koaxial durch in das Kopfstück 6 einschiebbare Führungsbolzen 13 zur Hubachse HA zusammen mit dem Hauptzylinder 10 axial verschiebbar gehalten ist. Der Ringzackenkolben 11 stützt sich auf Ringzackenbolzen 14 ab, die koaxial zur Hubachse HA angeordnet sind. Die Ringzackenbolzen 14 durchgreifen die Kopfplatte 12 lagern auf einer Ringzackendruckplatte 15, die an der Kopfplatte 12 durch einen Ringzackenhaltering 16 gesichert ist.
Dem Hauptzylinder 10 ist im Kopfstück 6 ein Druckraum 17 zugeordnet, der durch einen im Kopfstück 6 angeordneten Kanal 18 über einen Anschluss 19, eine Zuleitung 20 und ein steuerbares Ventil 21 mit der Druckleitung 22 des Hydrauliksystems 23 zum Aufbringen eines hydraulischen Vorspanndruckes P1 auf den Hauptzylinder 10 verbunden ist. Der beim Stanzvorgang auf den Hauptzylinder 10 wirkende Vorspanndruck P1 beträgt beispielsweise 270 bar.
Zum Verstellen des Hauptzylinders 10 wird der Druckraum 17 durch Schließen des Ventils 21 entspannt und der Hauptzylinder 10 hydraulisch angehoben. Der Verstellvorgang entspricht dem Stand der Technik und muss deshalb nicht weiter näher erläutert werden.
Der Ringzackenkolben 11, die Ringzackendruckbolzen 14 und die Ringzackendruckplatte 15 bilden miteinander eine kraftschlüssige in Richtung OT bzw. UT axial verschiebbare Anordnung, die die zum Schneiden und/oder Umformen notwendigen Ringzackenkräfte am Werkzeug bereitstellt.
Die Einstellung der Ringzackenkraft erfolgt durch Versorgung der Druckräume 25 und/oder 32 mit Hydrauliköl über die Ventile 27 und/oder 34, deren Druck über ein mit dem Rechner 36 durch eine Steuerleitung 74 verbundenes Proportionaldruckbegrenzungsventil 73 vorgegeben wird. Die Abstreifkraft wird durch die Druckräume 25 und 32 erzeugt.
Das Proportionaldruckbegrenzungsventils 73 ist über eine Leitung 75 mit einem Ölbehälter 76 zur Abführung des verdrängten Hydrauliköls beim Verdrängen des Ringzackenkolbens 11 verbunden.
Die Druckräume 25 und/oder 32 werden solange mit Druck beaufschlagt bis der vom Rechner 36 am Proportionaldruckbegrenzungsventil 73 vorgegebene Druck erreicht ist. Die Ventile 27 und 34 werden dann in eine geschlossene Mittelstellung gebracht.
Beim Verdrängen fließt das Hydrauliköl über das Proportionaldruckbegrenzungsventil 31 in den Ölbehälter 76, wobei der über den Rechner 36 eingestellte Druck am Proportionaldruckbegrenzungsventil 73 gehalten wird.
Die Ventile 27 und 34 werden geöffnet, sobald der Ringzackenkolben 11 den oberen Totpunkt OT erreicht.
Beim Abstreifen werden die Ventile 34 und 27 in Druckstellung gebracht und der Ringzackenkolben 11 durch den Druck P2 und P3 in seine Ausgangsposition zurückgedrückt.
Die Ventile 27 und 34 sind in diesem Beispiel als Proportionalwegeventile ausgeführt.
Der in den Druckräumen 29 und 32 erzeugte Abstreifdruck P2 und P3 beträgt beispielsweise 60 bar.

Der Hauptzylinder 10 weist - wie Fig. 4 zeigt- an seinem fußseitig der Kopfplatte 12 zugewandten Ende einen Aufnahmeraum 24 für die axial fluchtende Aufnahme des Ringzackenkolbens 11 auf. Oberhalb des Ringzackenkolbens 11 bildet der Aufnahmeraum 24 einen ersten Druckraum 25, der durch einen im Hauptzylinder 10 koaxial zur Hubachse HA verlaufenden Kanal 26 und eine Zuleitung 28 über ein steuerbares Ventil 27 durch mit der Hochdruckleitung 22 des Hydrauliksystems 23 zum Aufbringen des Ringzackenkolbendruckes P2 und/oder P3 auf den Ringzackenkolben 11 verbunden ist.
Der Ringzackenkolben 11 hat an seiner Rückseite eine Absetzung 69, die sicherstellt, dass bei Anschlag des Ringzackenkolbens 11 an die Wand des Druckraums 25 jederzeit Hydrauliköl im Druckraum 25 verbleibt und die Bewegung des Ringzackenkolbens 11 in Richtung UT ohne Verzögerung ausgelöst werden kann.
Zur Begrenzung der Hubbewegung des Ringzackenkolbens 11 in Richtung UT ist an der Kopfplatte 12 ein Absatz 70 ausgebildet.
Des Weiteren hat der Aufnahmeraum 24 des Hauptzylinders 10 ein von der Hubachse HA weg gerichteten Absatz 30, dem ein Absatz 31 am Ringzackenkolben 11 zugeordnet ist. Der Absatz 30 an der Innenwand 29 des Aufnahmeraumes 24 und der Absatz 31 am Ringzackenkolben 11 begrenzen einen zweiten Druckraum 32, der unterhalb des Druckraumes 25 liegt, welcher durch einen im Hauptzylinder 10 verlegten Kanal 33 und ein ansteuerbares Ventil 34 durch eine Druckleitung des Hydrauliksystems 23 zum Aufbringen eines im Druckraum 32 erzeugten Ringzackendruckes oder Abstreifdruckes auf den Ringzackenkolben 11 versorgt wird.

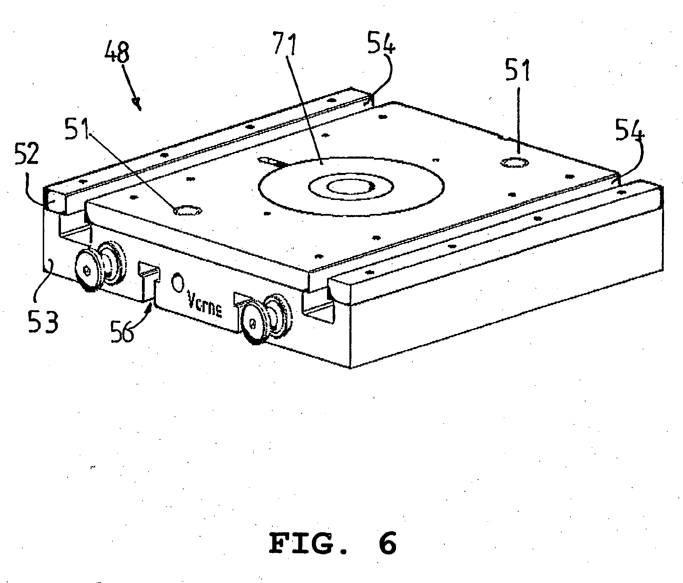

An der Kopfplatte 12 ist eine Wechselplatte 48 mittels Führungsbolzen 43a und 43b hängend gehalten. In das Oberteil 52 der Wechselplatte 48 ist eine der Ringzackendruckplatte 15 zugeordnete Druckplatte 71 und im Unterteil 53 ein Einlagering 72 eingesetzt (siehe auch Fig. 4 und 6). Die Druckplatte 71 bildet mit der Ringzackendruckplatte 15 eine vertikal verschiebbare Anordnung.

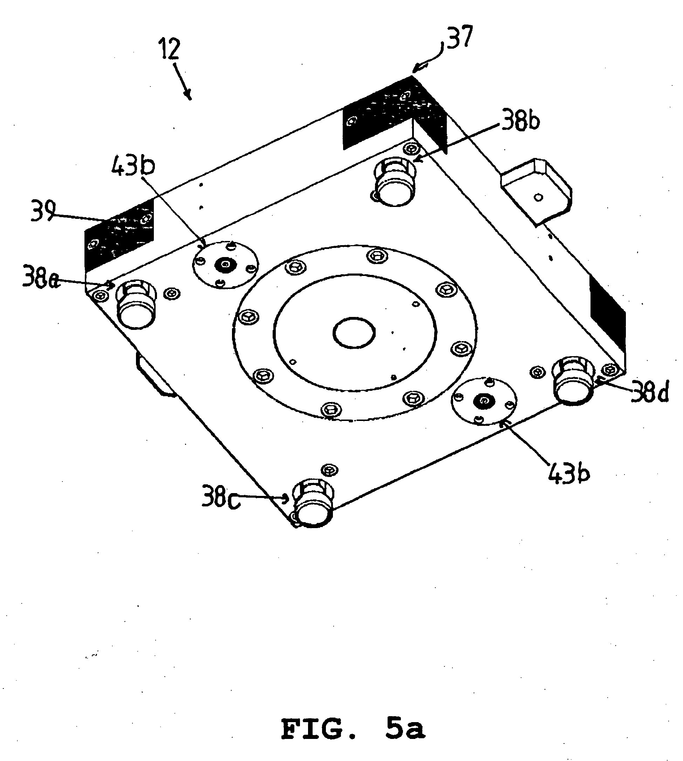

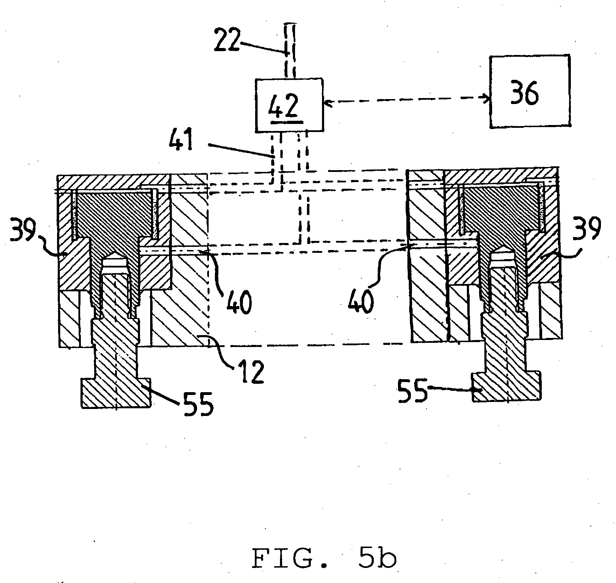

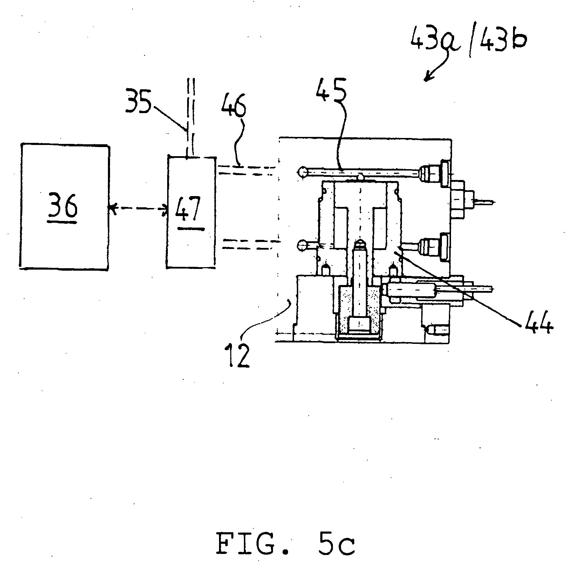

Es wird jetzt auf die Fig. 4 in Verbindung mit den Fig. 5a bis c Bezug genommen, welche die Kopfplatte 12 in vergrößerten Darstellungen zeigen.
Die Kopfplatte 12 ist als ein quaderförmiger Körper ausgebildet, in dessen Eckbereichen 37 jeweils hydraulische Spannmittel 38a, 38b, 38c und 38d integriert sind. Die hydraulischen Spannmittel 38a, 38b, 38c und 38d bestehen aus einseitig beaufschlagbaren Blockzylindern 39, die durch jeweils in der Kopfplatte 12 verlegte Kanäle 40 über eine gemeinsame Zuleitung 41 und ein vom Rechner 36 angesteuertes Ventil 42 an die Hochdruckleitung 22 des Hydrauliksystems 23 angeschlossen sind. Dadurch ist gewährleistet, dass alle Blockzylinder 38a, 38b, 38c und 38d gleichzeitig mit Hochdruck beaufschlagt werden oder vom Hochdruck entspannt werden können (siehe Fig. 5b). Die Spannkraft ist dabei so gewählt, dass sie deutlich größer als die Abstreifkraft ist. Neben den hydraulischen Spannmitteln weist die Kopfplatte 12 hydraulische Führungsbolzen 43a und 43b auf, die diametral gegenüberliegend voneinander gleich beabstandet vom Zentrum angeordnet sind. Dies ermöglicht, eine exakte Zentrierung an der Kopfplatte 12 vorzunehmen.
Die hydraulischen Führungsmittel 43a und 43b bestehen aus Einschraubzylindern 44, die ebenso wie die hydraulischen Spannmittel durch in der Kopfplatte 12 angeordnete Kanäle 45 über eine gemeinsame Zuleitung 46 und ein vom Rechner 36 angesteuertes Ventil 47 zum Zuschalten oder Wegschalten des Druckes an die Druckleitung 35 des Hydrauliksystems 23 angeschlossen sind (siehe Fig. 5c).
Der hydraulische Druck P5 zum Führen und Zentrieren an der Kopfplatte 12 beträgt beispielsweise 60 bar.

Die Fig. 6 zeigt in Verbindung mit der Fig. 3 die Wechselplatte 48 in vergrößerter perspektivischer Darstellung.
Die Wechselplatte 48 ist kraftlos an der Kopfplatte 12 hängend in einem Tastabstand 50 von der Kopfplatte 12 in einer unteren Endlage 49 gehalten und durch die hydraulischen Führungsmittel 43a und 43b an der Kopfplatte 12 zentriert geführt.
Der Tastabstand 50 zwischen Kopfplatte 12 und Wechselplatte 48 richtet sich nach den Eigenschaften des Antriebes, insbesondere nach dem Bremsweg des Antriebs 4. In diesem Beispiel beträgt der Tastabstand 50 zwei Millimeter.
Zum Zentrieren der Wechselplatte 48 an der Kopfplatte 12 ist die Wechselplatte 48 mit Führungslöchern 51 versehen, deren Lage und Position mit der Lage und Abmessung der Führungsmittel 43a und 43b abgestimmt sind, so dass die Einschraubzylinder 44 der Kopfplatte 12 in die Führungslöcher 51 der Wechselplatte 48 bei ihrer Hubbewegung eingreifen können.
Die Wechselplatte 48 ist sandwichartig aus einem Oberteil 52 aus Stahl und einem Unterteil 53 aus Aluminium zusammengesetzt. In der der Kopfplatte 12 zugewandten Seite des Oberteils 52 befinden sich jeweils in Flucht der Spannmittel 38a und 38b bzw. 38c und 38d Nuten 54 für die Aufnahme der Spannbolzen 55 der Spannmittel 38a bis 38d. Ebenso hat das Unterteil 53 auf seiner der Kopfplatte 12 abgewandten Seite entsprechende Nuten 56 für die Befestigung eines nicht weiter dargestellten Oberteils eines Werkzeugs.

Wie weiter aus den Fig. 3 und 4 hervorgeht, nimmt die Wechselplatte 48 eine kraftlos hängende untere Einbaulage 49 ein und definiert zwischen Kopfplatte 12 und Wechselplatte 48 einen Tastabstand 50, der dem Bremsweg des Antriebs 4 entspricht.
Der vom Kniehebel 3 durch den Antrieb 4 bewegte Stößel 2 erreicht bei seiner Bewegung in Richtung OT die Wechselplatte 48 und verfährt letztere an die Kopfplatte 12, so dass die Spannmittel 38a bis 38d in die Nuten 54 eingreifen und durch den zugeschalteten Hochdruck P4 des Hydrauliksystems 23 eine kraftschlüssige Verbindung zwischen Kopfplatte 12 und Wechselplatte 48 durch das Spannen der Spannbolzen 55 herstellen können, wenn über einen nachfolgend näher zu beschreibenden Tastbolzen 57 mit Sensor 58 ein Signal erzeugt wird, das an den Rechner 36 zur Ausgabe eines Steuerbefehls an das Ventil 42 zwecks Zuschaltung des Hochdrucks aus dem Hydrauliksystems 23 weitergeleitet wird. Die Wechselplatte 48 hat dann ihre obere Endlage 59 erreicht und die Schneid- und/oder Umformoperation im geschlossenen Werkzeug beginnt.

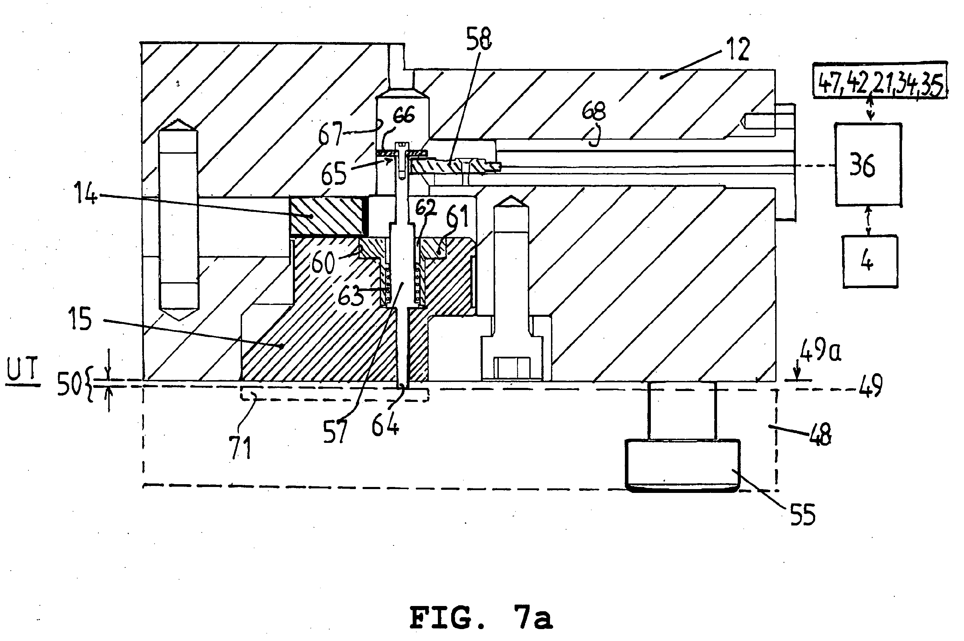

Die Fig. 7a bis 7c zeigen die Anordnung des Sensors 57 und des Tastbolzens 58 in der Kopfplatte 12 in der unteren Einbaulage 49 vor dem Tastvorgang, in der oberen Einbaulage 59 beim Start des Feinschneidens/Umformens und des Verdrängens der Ringzackendruckplatte 15 und in der Situation, in der das Feinschneiden/Umformen abgeschlossen und die Ringzackendruckplatte verdrängt ist.
Die Ringzackendruckplatte 15 hat einen koaxial zur Hubachse HU angeordneten Aufnahmeraum 60, in dem der Tastbolzen 57 von einer Aufnahmebüchse 61 gehalten und von einer Führungsbuchse 62 axial geführt ist.
Der Tastbolzen 57 stützt sich entgegen einer im Aufnahmeraum 60 gehaltenen Druckfeder 63 ab, die den Kopf 64 des Tastbolzens 57 in einem definierten Tastabstand 50 zur Druckplatte 71 der Wechselplatte 48. Im vorliegenden Beispiel liegt der Tastabstand 50 bei 2 mm.
Der Tastbolzen 57 trägt an seinem dem Kopf 64 gegenüberliegenden Fuß 65 eine Messscheibe 66, wobei der Fuß 65 und die Messscheibe 66 von einem in vertikaler Flucht des Aufnahmeraums 60 gelegenen Aufnahmeraum 67 der Kopfplatte 12 hineinreicht. Dieser Aufnahmeraum 67 ist so bemessen, dass der Tastbolzen 57 mit seiner Messscheibe 66 der vertikalen Bewegung der Druckplatte 71 folgen kann. Der Messscheibe 66 ist der Sensor 58 zugeordnet, welcher in horizontaler Lage in einer Ausnehmung 68 der Kopfplatte 12 einliegt und in kalibrierter Messlage zur Messscheibe 66 befestigt ist. Der Sensor 58 ist als Wegemesssensor, beispielsweise als induktiver Abstandssensor, ausgelegt und mit dem Rechner 36 verbunden, der die Signale des Sensors 58 verarbeitet und die entsprechenden Ventile der Hydrauliksystems 23 ansteuert (siehe Fig. 7a).
Erfasst der Sensor 58 eine gegenüber der kalibrierten Messlage verfrühte Bewegung der Druckplatte 71, die beispielsweise durch ein liegengebliebenes Stanzteil oder eine Fehleinstellung Werkzeugeinbauhöhe verursacht sein kann, gibt dieser ein Signal an den Rechner 36, der den Sofortstopp des Antriebs 4 auslöst.

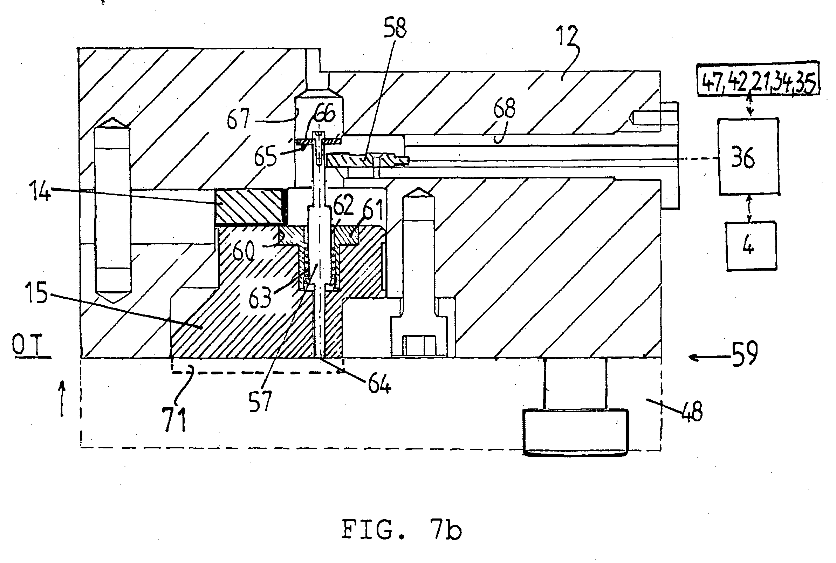

Die Fig. 7b zeigt den Zustand des Kraftschlusses zwischen Kopfplatte 12 und Wechselplatte 48. Der Tastbolzen 57 hat entgegen der Druckfeder 63 eine entsprechende Vertikalbewegung ausgeführt und die Messscheibe 66 hat sich vom Sensor 58 mindestens um den Tastabstand 50 entfernt. Der Sensor 58 erzeugt ein Signal, das an den Rechner 36 weitergeleitet wird, der das entsprechende Ventil 42 zum Zuschalten des Hochdrucks aus dem Hydrauliksystem 23 ansteuert. Die Spannmittel 38a bis 38d werden betätigt. Kopfplatte 12 und Wechselplatte 48 befinden sich im Kraftschluss, der so lange aufrechterhalten wird bis die Abstreifoperation beendet ist.

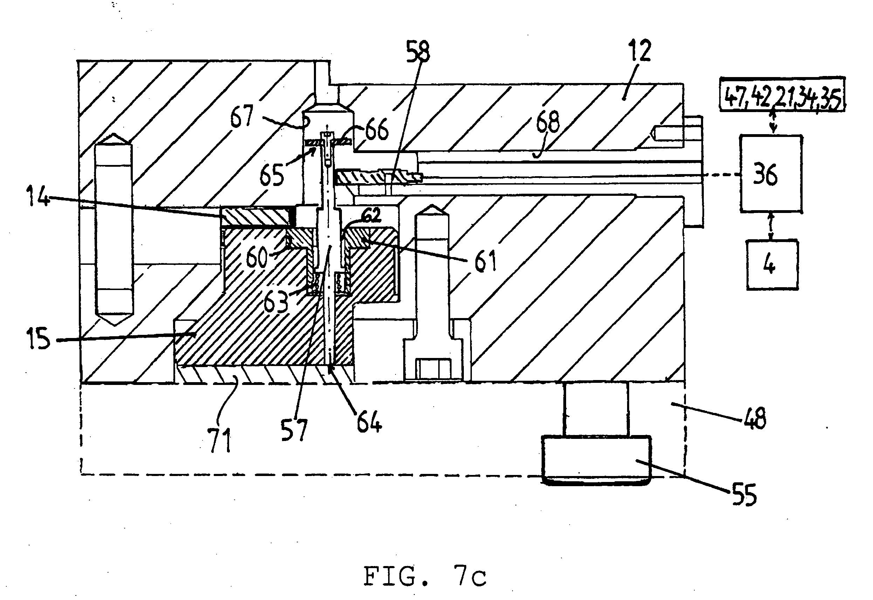

Die Fig. 7c zeigt die Situation am Ende des Feinschneidvorganges. Die Druckplatte 71 und die Ringzackendruckplatte 15 wurden entsprechend in Richtung OT verdrängt. Die Messscheibe 66 folgt der Aufwärtsbewegung des Tastkopfes 64 und hat sich dabei aus dem Messbereich des Sensors 58 herausbewegt. Es beginnt das Abstreifen. Die Ringzackendruckplatte 15 und die Druckplatte 71 bewegen sich beim Abstreifen in Richtung UT. Das Abstreifen ist beendet, wenn die Ringzackendruckplatte 15 und die Druckplatte 71 wieder die in Fig. 7b dargestellte Position erreicht haben. Während der Abstreifoperation bewegen sich die Ringzackendruckplatte 15 und die Druckplatte 71 in Richtung UT und die Messscheibe 66 gelangt wieder in den Messbereich des Sensors 58, der wiederum ein Signal erzeugt, das dem Rechner 36 zugeleitet wird, um durch Abschalten des Hochdrucks aus dem Hydrauliksystem 23 über das Ventils 42 die Spannmittel 38a bis 38d zu lösen. Der Kraftschluss zwischen Kopfplatte 12 und Wechselplatte 48 ist aufgehoben. Die Wechselplatte 48 mit dem daran angekoppelten Oberteil des Werkzeugs bewegt sich infolge ihres Gewichts durch die Schwerkraft wieder in die untere Endlage 49.

Das Hydrauliksystem 23 besteht aus einer Hochdruckleitung 22 und einer Niederdruckleitung 23a, die von einer nicht dargestellten Druckquelle auf einen Druck von 270 bzw. 60 bar gespannt sind. An die Druckleitung 22 sind die Zuleitung 20 für den Druckraum 17 des Hauptzylinders 10, die Zuleitung 22 für den Druckraum 25 des Ringzackenkolbens 11 und die Zuleitung 41 für die hydraulischen Spannmittel 38a bis 38d über die entsprechenden steuerbaren Ventile 21, 27 und 42 angeschlossen. Zum Hydrauliksystem 23 gehört auch ein Niederdrucknetz, das mit der Niederdruckleitung 23a für die Druckraum 25 und 32 zum Abstreifen und der Zuleitung 46 für die Führungsbolzen 43a und 43b über die Ventile 34 und 47 verbunden sind.

Das erfindungsgemäße Verfahren wird nachfolgendnäher erläutert.
Zwischen der Kopfplatte 12 und einer an der Kopfplatte 12 kraftlos geführten Wechselplatte 48 wird ein an den Bremsweg des Antriebes 4 angepasster Tastabstand 4 eingestellt, dessen Änderung durch eine stößelabhängige zeitlich verfrühte Bewegung der Wechselplatte 48 von einem Sensor 58 erfasst, in ein Signal gewandelt und an den Rechner 56 zum Sofortstopp des Antriebs 4 und Abschalten des Hydrauliksystems 23 weitergeleitet.

Das Verfahren läuft wie folgt ab:
a) Erfassen der Position der Ringzackendruckplatte 15 in einem unteren Endanschlag 49a durch eine einen unter Federkraft stehenden Tastbolzen 57, einen Sensor 58 und eine Messscheibe 66 umfassende Tasteinrichtung und Kalibrieren dieser Position als Nullpunkt im Rechner 36,
b) Ankoppeln einer eine Druckplatte 71 enthaltenen Wechselplatte 48 an die Ringzackendruckplatte 15 tragende Kopfplatte 12, Andrücken des Tastbolzens 57 auf die Druckplatte 71, Erfassen dieser Position als eine untere Endlage 49 der Wechselplatte 48 durch die Messscheibe 66 und Übergabe dieser Position an den Rechner 36 als Vergleichsposition,
c) Durchführen einer Hubbewegung der Wechselplatte 48 aus der unteren Endlage 49 in eine obere Endlage 59 an der Kopfplatte 12 durch den Stößel 2 des Kniehebels 3,
d) Erfassen der Hubpositionen der Druckplatte 71 während der Hubbewegung der Wechselplatte durch die Messscheibe 66 und Abschalten des Antriebs 4 und des Hydrauliksystems, wenn der Vergleich der von der Tasteinrichtung ermittelten aktuellen Positionen mit der Vergleichsposition nach Schritt b) durch den Rechner 36 eine verfrühte Bewegung der Druckplatte 71 ermittelt wird,
e) Erfassen der oberen Endlage 59 der Wechselplatte 48 durch die Messscheibe 66 und Ausgabe eines Signals an den Rechner 36 zum Zuschalten des Hydrauliksystems 23 auf die hydraulischen Spannmittel 38a bis 38b der Kopfplatte 12, sofern von der Messscheibe 66 keine verfrühte Bewegung der Druckplatte 71 festgestellt wird,
f) Herstellen eines Kraftschlusses zwischen Kopfplatte 12 und Wechselplatte 48 in der oberen Endlage 59 durch die hydraulischen Spannmittel 38a bis 38d an der Kopfplatte 12 mittels eines Haltedruckes P4 aus dem Hydrauliksystem 23 und Verdrängen der Ringzackendruckplatte 15 in Richtung OT,
g) Durchführen einer Druckbeaufschlagung der Ringzackendruckplatte 15 in Richtung UT zum Abstreifen des Stanzgitters
h) Halten von Kopfplatte 12 und Wechselplatte 48 im kraftschlüssigem Zustand bis die Messscheibe 66 das Ende des Abstreifvorgangs detektiert und der Sensor 58 ein Signal an den Rechner 36 zum Lösen der Wechselplatte 48 ausgibt,
i) Lösen des Kraftschlusses zwischen Kopfplatte 12 und Wechselplatte 48 durch Abschalten des auf die hydraulischen Spannmittel 38a bis 38d wirkenden Druckes des Hydrauliksystems 23 über den Rechner 36 und Zurückfallen der gelösten Wechselplatte 48 durch die Schwerkraft in ihre untere Endlage 49 und,
j) Wiederholen der Schrittfolgen a) bis c) und e) bis h), sofern die Tasteinrichtung keine verfrühte Bewegung der Wechselplatte 48 nach Schritt d) detektiert kat.

Wird eine verfrühte Bewegung der Wechselplatte 48 detektiert, erfolgt eine Schnellabschaltung, d.h. ein Sofortstopp der Presse. Ein Sofortstopp wird immer dann ausgelöst, sobald sich Stanzabfälle, Teile oder sonstige Fremdkörper im Werkzeug befinden, weil dies zu einer verfrühten Änderung des Tastabstandes 50 führt.

**Bezugszeichenliste**

| | |
|---|---|
| Feinschneidpresse | 1 |
| Stößel | 2 |
| Kniehebel | 3 |
| Antrieb | 4 |
| Tischplatte | 5 |
| Kopfstück | 6 |
| Spannschrauben | 7 |
| Feinschneidkopf | 8 |
| Pressenständer | 9 |
| Hauptzylinder | 10 |
| Ringzackenkolben | 11 |
| Kopfplatte | 12 |
| Führungsbolzen | 13 |
| Ringzackenbolzen | 14 |
| Ringzackendruckplatte | 15 |
| Ringzackenhaltering | 16 |
| Druckraum für Hauptzylinder 10 | 17 |
| Kanal im Kopfstück 6 | 18 |
| Anschluss | 19 |
| Zuleitung für Druckraum 17 | 20 |
| Ventil für Druckraum 17 | 21 |
| Hochdruckleitung | 22 |
| Hydrauliksystem-Hochdruckleitung | 23 |
| Hydrauliksystem-Niederdruckleitung | 23a |
| Aufnahmeraum für 11 in 10 | 24 |
| Erster Druckraum für 11 | 25 |
| Kanal für 25 | 26 |
| Steuerbares Ventil für 25 | 27 |
| Zuleitung für 25 | 28 |
| Innenwand von 24 | 29 |
| Absatz an 29 | 30 |
| Absatz an 11 | 31 |
| Zweiter Druckraum für 11 | 32 |
| Kanal für 32 | 33 |
| Ventil für 32 | 34 |
| Druckleitung | 35 |
| Rechner | 36 |
| Eckbereiche von 12 | 37 |
| Hydraulische Spannmittel | 38a, 38b, 38c, 38d |
| Blockzylinder | 39 |
| Kanäle in 12 für 39 | 40 |
| Zuleitung für 38a bis 38d | 41 |
| Ventil in 41 | 42 |
| Führungsbolzen | 43a, 43b |
| Einschraubzylinder | 44 |
| Kanäle für 44 in 12 | 45 |
| Zuleitung für 44 | 46 |
| Ventil in 46 für 44 | 47 |
| Wechselplatte | 48 |
| Untere Endlage der Wechselplatte | 49 |
| Unterer Endanschlag der Ringzackendruckplatte | 49a |
| Tastabstand | 50 |
| Führungslöcher in 48 | 51 |
| Oberteil von 48 | 52 |
| Unterteil von 48 | 53 |
| Nuten in 52 für 12 | 54 |
| Spannbolzen von 38a bis 38d | 55 |
| Nuten für Werkzeugbefestigung | 56 |
| Tastbolzen | 57 |
| Sensor | 58 |
| Obere Endlage von 48 | 59 |
| Aufnahmeraum in 15 | 60 |
| Aufnahmebüchse | 61 |
| Führungsbüchse | 62 |
| Druckfeder | 63 |
| Kopf des Tastbolzens | 64 |
| Fuß des Tastbolzens | 65 |
| Messscheibe | 66 |
| Aufnahmeraum 12 für 57 | 67 |
| Horizontale Ausnehmung für 58 | 68 |
| Absetzung an 11 | 69 |
| Absatz an 12 | 70 |
| Druckplatte in 52 | 71 |
| Einlagering von 53 | 72 |
| Proportionaldruckbegrenzungsventil | 73 |
| Steuerleitung für 73 | 74 |
| Leitung | 75 |
| Ölbehälter | 76 |
| Hubachse von 1 | HA |
| Vorspanndruck | P1 |
| Ringzackenkolbendruck | P2 und/oder P3 |
| Abstreifdruck | P2 und P3 |
| Haltedruck | P4 |
| Führungsdruck | P5 |

## Patentansprüche

1. Vorrichtung zum Verhindern des Bruchs eines Werkzeugs beim Feinschneiden und/oder Umformen in einer Presse (1) mit einem durch einen Antrieb (4) angetriebenen, eine Hubbewegung zwischen OT und UT ausführenden Stößel (2) und einem oberhalb des Stößels (2) angeordneten Feinschneidkopfes (8), der einen Hauptzylinder (10) umfasst, in dem ein auf der Hubachse (HUA liegender Ringzackenkolben (11) aufgenommen ist, dem mehrere koaxial zur Hubachse (HA) angeordnete Ringzackendruckbolzen (14) zugeordnet sind, die in einer am Hauptzylinder (10) befestigten Kopfplatte (12) axial geführt sind und sich auf einer zur Kopfplatte (12) gehörenden Ringzackendruckplatte (15) abstützen, welche mit dem Ringzackenkolben (11) und Ringzackendruckbolzen (41) eine axial verschiebbare Anordnung für die Schneid-, Umform- und Abstreifoperation bildet, wobei der Feinschneidkopf (8) mit einem Hydrauliksystem (23) zum Erzeugen von auf das Werkzeug wirkende Drücke über durch einen Rechner (36) ansteuerbare Ventile (21,27,34,42) in Verbindung steht, **dadurch gekennzeichnet, dass** die Kopfplatte (12) mit hydraulischen Spannmitteln (38a bis 38d) zum Halten und hydraulischen Führungsmitteln (43a, 43b) zum Führen einer an der Kopfplatte (12) hängend angeordneten Wechselplatte (48) versehen ist, die in einer unteren Endlage (49) kraftlos zur Kopfplatte (12) gehalten und in einer oberen Endlage (59) kraftschlüssig mit der Kopfplatte (12) in Abhängigkeit der Abstreifoperation des Stanzgitters von der Ringzackendruckplatte (15) verbind- und wieder lösbar ist, wobei die Wechselplatte (48) durch eine des Bewegung des Stößels (2 von der unteren in die obere Endlage (49,59) und durch Schwerkraft von der oberen in die untere Endlage (59, 49) überführbar ist, und dass zwischen Kopfplatte (12) und Wechselplatte (48) ein an den Bremsweg des Antriebs (4) angepasster Tastabstand (50) vorgesehen ist, dem eine in der Ringzackendruckplatte (15) angeordnete Tasteinrichtung (57,66) zugeordnet ist, welche über einen in der Kopfplatte (12) angeordneten Sensor (58) bei einer zeitlich verfrühten Bewegung einer in der Wechselplatte (48) angeordneten Druckplatte (71) ein Signal an den Rechner (36) zum Stopp des Antriebs (4) und Abschalten des Hydrauliksystems (23) ausgibt.

2. Vorrichtung nach Anspruch 1, **dadurch gekennzeichnet, dass** die hydraulischen Spannmittel (38a bis 38d) durch jeweils separat in der Kopfplatte (12) angeordnete Kanäle (40) an eine gemeinsame Zuleitung (41) angeschlossen sind, die über ein durch den Rechner (36) angesteuertes Ventil (42) zum Spannen oder Lösen des Kraftschlusses zwischen Kopfplatte (12) und Wechselplatte (48) mit dem Hydrauliksystem (23) des Feinschneidkopfes (8) verbunden ist.

3. Vorrichtung nach Anspruch 1 oder 2, **dadurch gekennzeichnet, dass** die hydraulischen Spannmittel (38a bis 38d) einseitig wirkende Blockzylinder (39) mit einem an den Tastabstand (50) angepassten Hub sind.

4. Vorrichtung nach Anspruch 1, **dadurch gekennzeichnet, dass** die hydraulischen Führungsmittel (43a,43b) durch separat in der Kopfplatte (12) angeordnete Kanäle (45) an eine gemeinsame Zuleitung (46) angeschlossen sind, die über ein durch den Rechner (36) angesteuertes Ventil (47) zum Öffnen und Schließen mit einer Niederdruckleitung (35) des Hydrauliksystems (23a) des Feinschneidkopfes (8) verbunden ist.

5. Vorrichtung nach Anspruch 1, **dadurch gekennzeichnet, dass** die Wechselplatte (48) mit Führungslöchern (51) für die Aufnahme und Führung der an der Kopfplatte (12) angeordneten Führungsmittel (43a,43b) zum Stabilisieren der Wechselplatte (48) beim Leerhub in die obere Endlage (59) und beim Rückfallen in die untere Endlage (49) versehen ist.

6. Vorrichtung nach Anspruch 1, **dadurch gekennzeichnet, dass** die hydraulischen Führungsmittel (43a,43b) Einschraubzylinder (44) mit einem gegenüber dem Tastabstand wesentlich größeren Hubweg sind.

7. Vorrichtung nach Anspruch 1, **dadurch gekennzeichnet, dass** die Wechselplatte (48) eine Sandwichkonstruktion umfasst, deren Oberteil (52) aus Stahl und dessen Unterteil (53) aus Aluminium besteht, wobei das Oberteil (52) mit Nuten (54) versehen ist, in die die Spannmittel (38a bis 38d) der Kopfplatte (12) eingreifen und das Unterteil (53) Nuten (56) zur Befestigung des Werkzeugoberteils aufweist.

8. Vorrichtung nach Anspruch 1, **dadurch gekennzeichnet, dass** die Ringzackendruckplatte (15) einen parallel zur Hubachse (HA) angeordneten Aufnahmeraum (60) für die Aufnahme eines unter Federkraft stehenden Tastbolzens (57) aufweist, welcher mit seinem Kopf (64) auf der Druckplatte (71) der Wechselplatte (48) aufliegt und der Bewegung der Wechselplatte (48) beim Leerhub folgt sowie an seinem Fuß (65) zum Erfassen der Bewegung der Wechselplatte (48) und der Ringzackendruckplatte (15) eine Messscheibe (66) trägt, der der in einer horizontal gelegenen Ausnehmung (68) der Kopfplatte (12) angeordnete Sensor (58) zugeordnet ist, welcher die von der Wechselplatte (48) erzeugte Hubbewegung der Messscheibe (66) in die obere Endlage (59) der Wechselplatte (48) detektiert und ein Signal an den Rechner (36) zum Herstellen des Kraftschlusses zwischen Kopfplatte (12) und Wechselplatte (48) mittels Spannen der Spannmittel (38a bis 38d) durch das Ansteuern des Ventils (42) zum Zuschalten des Hochdrucks aus dem Hydrauliksystem (23) ausgibt, wenn ein der oberen Endlage (59) entsprechendes Abstandsmaß zwischen Messscheibe (66) und Sensor (58) erreicht ist, wobei der Kraftschluss zwischen Kopfplatte (12) und Wechselplatte (48) durch ein Signal des Sensors (58) an den Rechner (36) zum Abschalten des Hydrauliksystems (23) dann gelöst wird, sobald die Messscheibe (66) bei ihrer Rückbewegung infolge des Abstreifvorgangs das Abstandsmaß wieder erreicht.

9. Vorrichtung nach Anspruch 8, **dadurch gekenn**z**eichnet,** dass der Sensor (58) ein berührungsloser Wegesensor, insbesondere induktiver Abstandssensor ist.

10. Vorrichtung nach Anspruch 1, **dadurch gekennzeichnet, dass** der Druckraum (17) für den Hauptzylinder (10) im Kopfstück (6) des Feinschneidkopfes (8) ausgebildet ist, der über einen Anschluss (19) am Kopfstück (6) und eine Zuleitung (20) an eine Hochdruckleitung (22) des Hydrauliksystems (23) angeschlossen ist, wobei der Druckraum (17) durch ein in der Zuleitung (20) gelegenes, vom Rechner (36) angesteuertes Ventil (21) mit einem Vorspanndruck beaufschlagbar und zum Entspannen schaltbar ist.

11. Vorrichtung nach Anspruch 1, **dadurch gekennzeichnet, dass** zum Erzeugen der Ringzackenkraft ein erster Druckraum (25) und/oder ein zweiter Druckraum (32) und zum Erzeugen der Abstreifkraft der erste Druckraum (25) und der zweite Druckraum (32) vorgesehen sind, wobei die Druckräume (25,32) für die Ringzackenkraft und Abstreifkraft jeweils durch im Hauptzylinder (10) axial angeordnete Kanäle (26,33) und Zuleitungen (28) mit dem Hydrauliksystems (23) über je ein vom Rechner (36) angesteuertes Ventil (27,34) verbunden sind.

12. Vorrichtung nach Anspruch 1, **dadurch gekennzeichnet, dass** der dem Ringzackenkolben (11) zugeordnete Druckraum (25) unterhalb des Druckraums (17) des Hauptzylinders (10) angeordnet ist.

13. Vorrichtung nach Anspruch 1, **dadurch gekennzeichnet, dass** die Kopfplatte (12) durch achsparallele zur Hubachse (HA) in Bohrungen des Kopfstückes (6) geführte Führungsbolzen (13) verdrehsicher und axial verschiebbar angeordnet ist.

14. Vorrichtung nach Anspruch 1, **dadurch gekennzeichnet, dass** der Stößel (2) über einen modifizierten Kniehebel (3) getriebelos mit dem Antrieb (4) verbunden ist, wobei der Kniehebel (3) unterhalb des Stößels (2) und der Antrieb (4) fußseitig am Pressenständer (9) angeordnet sind.

15. Verfahren zum Verhindern des Bruchs eines Werkzeugs beim Feinschneiden und/oder Umformen in einer durch einen Antrieb (4) über ein modifizierten Kniehebel (3) angetriebenen Presse (1) mit einer Vorrichtung nach Anspruch 1, bei dem die im Hauptzylinder (10) und Kopfplatte (12) des Feinschneidkopfes (8) geführten Ringzackenkolben (11), Ringzackendruckbolzen (14) und Ringzackendruckplatte (15) zum Aufbringen einer Ringzackenkraft und Abstreifkraft mit einem regelbaren Druck aus einem Hydrauliksystem (23) beaufschlagt werden, wobei die einzelnen Drücke über durch einen Rechner (36) eingestellte Ventile (21,27,34,42) angesteuert werden, **dadurch gekennzeichnet, dass** zwischen Kopfplatte (12) und einer an der Kopfplatte (12) kraftlos geführten Wechselplatte (48) ein an den Bremsweg des Antriebes (4) angepasster Tastabstand (50) eingestellt wird, dessen Änderung durch eine stößelabhängige zeitlich verfrühte Bewegung einer in der Wechselplatte (48) angeordneten Druckplatte (71) von einer Tasteinrichtung (57, 66) und einem Sensor (58) erfasst, in ein Signal gewandelt und an den Rechner (36) zum Sofortstopp des Antriebs (4) und Abschalten des Hydrauliksystems (23) weitergeleitet wird.

16. Verfahren nach Anspruch 15, **gekennzeichnet durch** folgende Schritte:
a) Erfassen der Position der Ringzackendruckplatte (15) in einem unteren Endanschlag (49a) **durch** die einen unter Federkraft stehenden Tastbolzen (57), einen Sensor (58) und eine Messscheibe (66) umfassende Tasteinrichtung und Kalibrieren dieser Position als Nullpunkt im Rechner (36),
b) Ankoppeln der die Druckplatte (71) enthaltenen Wechselplatte (48) an die Ringzackendruckplatte (15) tragende Kopfplatte (12), Andrücken des Tastbolzens (57) auf die Druckplatte (71), Erfassen dieser Position als eine untere Endlage (49) der Wechselplatte (48) **durch** die Messscheibe (66) und Übergabe dieser Position an den Rechner (36) als Vergleichsposition,
c) Durchführen einer Hubbewegung der Wechselplatte (48) aus der unteren Endlage (49) in eine obere Endlage (59) an der Kopfplatte (12) **durch** den Stößel (2) des Kniehebels (3),
d) Erfassen der Hubpositionen der Druckplatte (71) während der Hubbewegung der Wechselplatte (48) **durch** die Messscheibe (66) und Abschalten des Antriebs (4) und des Hydrauliksystems, wenn der Vergleich der von der Tasteinrichtung ermittelten aktuellen Position mit der Vergleichsposition nach Schritt b) **durch** den Rechner (36) eine verfrühte Bewegung der Druckplatte 71 ermittelt,
e) Erfassen der oberen Endlage (59) der Wechselplatte (48) **durch** die Messscheibe (66) und Ausgabe eines Signals an den Rechner (36) zum Zuschalten des Hydrauliksystems (23) auf die hydraulischen Spannmittel (38a bis 38b) der Kopfplatte (12), sofern von der Messscheibe (66) keine verfrühte Bewegung der Druckplatte (71) festgestellt wird,
f) Herstellen eines Kraftschlusses zwischen Kopfplatte (12) und Wechselplatte (48) in der oberen Endlage (59) **durch** die hydraulischen Spannmittel (38a bis 38d) an der Kopfplatte (12) mittels eines Haltedruckes (P4) aus dem Hydrauliksystem (23) und Verdrängen der Ringzackendruckplatte (15) in Richtung OT zum Abstreifen des Stanzgitters,
g) Durchführen einer Druckbeaufschlagung des Ringzackenkolbens (11) zum Abstreifen des Stanzgitters mit der Ringzackendruckplatte (15) in Richtung UT,
h) Halten von Kopfplatte (12) und Wechselplatte (48) im kraftschlüssigem Zustand bis die Messscheibe (66) das Ende des Abstreifvorgangs detektiert und der Sensor (58) ein Signal an den Rechner (36) zum Lösen der Wechselplatte (48) ausgibt,
i) Lösen des Kraftschlusses zwischen Kopfplatte (12) und Wechselplatte (48) **durch** Abschalten des auf die hydraulischen Spannmittel (38a bis 38d) wirkenden Druckes des Hydrauliksystems (23) über den Rechner (36) und Zurückfallen der gelösten Wechselplatte (48) **durch** die Schwerkraft in ihre untere Endlage (49) und,
j) Wiederholen der Schrittfolgen a) bis c) und e) bis h), sofern die Tasteinrichtung keine verfrühte Bewegung der Wechselplatte (48) nach Schritt d) detektiert kat.

17. Verfahren nach Anspruch 16, **dadurch gekennzeichnet, dass** die mit dem Haltedruck (P4) erzeugte Haltekraft für den Kraftschluss zwischen Kopfplatte (12) und Wechselplatte (48) auf einen Wert eingestellt wird, der gegenüber dem mit dem Abstreifdruck (P2,P3) erzeugte Abstreifkraft deutlich größer ist.

18. Verfahren nach Anspruch 16, **dadurch gekennzeichnet, dass** der Vorspanndruck für den Ringzackenkolben auf einen Hochdruck von etwa 270 bar, der Abstreifdruck (P2, P3) auf einen Niederdruck von etwa 60 bar, der Haltedruck (P4) auf etwa 270 bar und der Führungsdruck (P5) auf etwa 60 bar eingestellt wird.

## Claims

1. A device for preventing breakage of a tool during fineblanking and/or forming in a press (1) with a slide (2) driven by a drive (4) and performing a stroke motion between OT and UT and a fineblanking head (8) arranged above the slide (2), which head (8) comprises a main cylinder (10), in which a toothed ring piston (11) is accommodated on the stroke axis (HA), with which toothed ring piston (11) a plurality of toothed ring clamping bolts (14) arranged coaxially with the stroke axis (HA), which bolts (14) are guided axially in a top plate (12) mounted on the main cylinder (10) and rest on a toothed ring pressure plate (15) which, with the toothed ring piston (11) and toothed ring clamping bolts (14), forms an axially displaceable arrangement for the cutting, forming and stripping operation, the fineblanking head (8) being connected with a hydraulic system (23) for generating pressures acting on the tool via valves (21, 27, 34, 42) drivable by a computer (36), **characterised in that** the top plate (12) is provided with hydraulic clamping means (38a to 38d) for holding and hydraulic guide means (43a, 43b) for guiding an exchangeable plate (48) arranged suspended on the top plate (12), which exchangeable plate (48) is held in a lower end position (49) without application of force relative to the top plate (12) and, in an upper end position (59), may be connected by non-interlocking contact fit with the top plate (12) and disconnected again as a function of the operation of stripping the punching scrap from the toothed ring pressure plate (15), the exchangeable plate (48) being transferrable by a movement of the slide (2) from the lower into the upper end position (49, 59) and by gravity from the upper into the lower end position (59, 49), and **in that** between top plate (12) and exchangeable plate (48) a sensing distance (50) adapted to the braking path of the drive (4) is provided, with which is associated a sensing device (57, 66) which is arranged in the toothed ring pressure plate (15) and, via a sensor (58) arranged in the top plate (12), outputs a signal to the computer (36) to stop the drive (4) and disconnect the hydraulic system (23) in the event of a premature movement of a pressure plate (71) arranged in the exchangeable plate (48).

2. A device according to claim 1, **characterised in that** the hydraulic clamping means (38a to 38d) are connected in each case by ducts (40) arranged separately in the top plate (12) to a common feed line (41), which is connected via a valve (42) driven by the computer (36) to the hydraulic system (23) of the fineblanking head (8) for clamping or releasing of the non-interlocking contact fit between top plate (12) and exchangeable plate (48).

3. A device according to claim 1 or claim 2, **characterised in that** the hydraulic clamping means (38a to 38d) are unilaterally acting block cylinders (39) with a stroke conformed to the sensing distance (50).

4. A device according to claim 1, **characterised in that** the hydraulic guide means (43a, 43b) are connected by ducts (45) arranged separately in the top plate (12) to a common feed line (46), which is connected via a valve (47) driven by the computer (36) for opening and closing purposes to a low-pressure line (35) of the hydraulic system (23a) of the fineblanking head (8).

5. A device according to claim 1, **characterised in that** the exchangeable plate (48) is provided with guide holes (51) for receiving and guiding the guide means (43a, 43b) arranged on the top plate (12) to stabilise the exchangeable plate (48) during an idle stroke into the upper end position (59) and on dropping back into the lower end position (49).

6. A device according to claim 1, **characterised in that** the hydraulic guide means (43a, 43b) are screwed cylinders (44) with a stroke travel which is significantly greater than the sensing distance.

7. A device according to claim 1, **characterised in that** the exchangeable plate (48) comprises a sandwich structure, the upper part (52) of which consists of steel and the lower part (53) of which consists of aluminium, the upper part (52) being provided with channels (54) in which the clamping means (38a to 38d) of the top plate (12) engage and the lower part (53) having channels (56) for mounting the tool upper part.

8. A device according to claim 1, **characterised in that** the toothed ring pressure plate (15) has a receiving space (60) arranged parallel to the stroke axis (HA) for receiving a resiliently loaded sensing pin (57), which rests with its head (64) on the pressure plate (71) of the exchangeable plate (48) and follows the movement of the exchangeable plate (48) during the idle stroke and bears at its foot (65) a measuring disc (66) for detecting movement of the exchangeable plate (48) and toothed ring pressure plate (15), which measuring disc (66) is associated with the sensor (58) arranged in a horizontally positioned recess (68) in the top plate (12), said sensor detecting the stroke motion, generated by the exchangeable plate (48), of the measuring disc (66) into the upper end position (59) of the exchangeable plate (48) and outputting a signal to the computer (36) for producing the non-interlocking contact fit between top plate (12) and exchangeable plate (48) by means of clamping the clamping means (38a to 38d) by driving the valve (42) to connect the high pressure from the hydraulic system (23), if a clearance between measuring disc (66) and sensor (58) corresponding to the upper end position (59) is achieved, the non-interlocking contact fit between top plate (12) and exchangeable plate (48) then being released by a signal of the sensor (58) to the computer (36) to disconnect the hydraulic system (23) as soon as the measuring disc (66) once again reaches the clearance on its return movement as a result of the stripping process.

9. A device according to claim 8, **characterised in that** the sensor (58) is a contactless displacement sensor, in particular an inductive distance sensor.

10. A device according to claim 1, **characterised in that** the pressure chamber (17) for the main cylinder (10) is formed in the head piece (6) of the fineblanking head (8), which is connected via a connection (19) on the head piece (6) and a feed line (20) to a high-pressure line (22) of the hydraulic system (23), wherein the pressure chamber (17) may be supplied with a preloading pressure and connected for the purposes of relief by a valve (21) positioned in the feed line (20) and driven by the computer (36).

11. A device according to claim 1, **characterised in that** a first pressure chamber (25) and/or a second pressure chamber (32) are provided to generate the toothed ring force and the first pressure chamber (25) and the second pressure chamber (32) are provided to generate the stripping force, wherein the pressure chambers (25, 32) for the toothed ring force and stripping force are each connected by ducts (26, 33) and feed lines (28) arranged axially in the main cylinder (10) to the hydraulic system (23) respectively via a valve (27, 34) driven by the computer (36).

12. A device according to claim 1, **characterised in that** the pressure chamber (25) associated with the toothed ring piston (11) is arranged below the pressure chamber (17) of the main cylinder (10).

13. A device according to claim 1, **characterised in that** the top plate (12) is arranged non-rotatably and axially displaceably by guide pins (13) guided axially parallel to the stroke axis (HA) in bores in the head piece (6).

14. A device according to claim 1, **characterised in that** the slide (2) is connected gearlessly to the drive (4) via a modified toggle mechanism (3), wherein the toggle mechanism (3) is arranged under the slide (2) and the drive (4) is arranged at the foot end on the press frame (9).

15. A method for preventing breakage of a tool during fineblanking and/or forming in a press (1) driven by a drive (4) via a modified toggle mechanism (3), having a device according to claim 1, in which the toothed ring piston (11), toothed ring clamping bolts (14) and toothed ring pressure plate (15) guided in the main cylinder (10) and top plate (12) of the fineblanking head (8) are supplied with a regulatable pressure from a hydraulic system (23) to apply a toothed ring force and stripping force, the individual pressures being driven by valves (21, 27, 34, 42) adjusted by a computer (36), **characterised in that,** between top plate (12) and an exchangeable plate (48) guided without application of force on the top plate (12), a sensing distance (50) conformed to the braking path of the drive (4) is established, changes in which resulting from a slide-dependent, premature movement of a pressure plate (71) arranged in the exchangeable plate (48) being detected by a sensing device (57, 66) and a sensor (58), converted into a signal and relayed to the computer (36) for immediately stopping the drive (4) and disconnecting the hydraulic system (23).

16. A method according to claim 15, **characterised by** the following steps:
a) detection of the position of the toothed ring pressure plate (15) at a lower end limit stop (49a) by the sensing device comprising a resiliently loaded sensing pin (57), a sensor (58) and a measuring disc (66) and calibrating this position as zero point in the computer (36),
b) coupling of the exchangeable plate (48) containing the pressure plate (71) to the top plate (12) bearing the toothed ring pressure plate (15), pressing of the sensing pin (57) onto the pressure plate (71), detection of this position as a lower end position (49) of the exchangeable plate (48) by the measuring disc (66) and transfer of this position to the computer (36) as comparison position,
c) performance of a stroke motion of the exchangeable plate (48) from the lower end position (49) into an upper end position (59) on the top plate (12) by the slide (2) of the toggle mechanism (3),
d) detection of the stroke positions of the pressure plate (71) during the stroke motion of the exchangeable plate (48) by the measuring disc (66) and disconnection of the drive (4) and of the hydraulic system when comparison of the current position determined by the sensing device with the comparison position according to step b) by the computer (36) determines premature movement of the pressure plate (71),
e) detection of the upper end position (59) of the exchangeable plate (48) by the measuring disc (66) and output of a signal to the computer (36) for connection of the hydraulic system (23) to the hydraulic clamping means (38a to 38b) of the top plate (12), providing no premature movement of the pressure plate (71) is identified by the measuring disc (66),
f) production of a non-interlocking contact fit between top plate (12) and exchangeable plate (48) in the upper end position (59) by the hydraulic clamping means (38a to 38d) on the top plate (12) by means of a holding pressure (P4) from the hydraulic system (23) and displacement of the toothed ring pressure plate (15) towards the OT for stripping off the punching scrap,
g) application of pressure to the toothed ring piston (11) for stripping off the punching scrap with the toothed ring pressure plate (15) towards UT,
h) holding of top plate (12) and exchangeable plate (48) in the non-interlocking contact fit until the measuring disc (66) detects the end of the stripping process and the sensor (58) outputs a signal to the computer (36) to release the exchangeable plate (48),
i) release of the non-interlocking contact fit between top plate (12) and exchangeable plate (48) by disconnection of the pressure from the hydraulic system (23) acting on the hydraulic clamping means (38a to 38d) via the computer (36) and fall-back of the released exchangeable plate (48) as a result of gravity into the lower end position (49) thereof and,
j) repetition of step sequences a) to c) and e) to h), providing the sensing device has not detected any premature movement of the exchangeable plate (48) after step d).

17. A method according to claim 16, **characterised in that** the holding force generated with the holding pressure (P4) for the non-interlocking contact fit between top plate (12) and exchangeable plate (48) is adjusted to a value which is markedly greater than the stripping force generated with the stripping pressure (P2, P3).

18. A method according to claim 16, **characterised in that** the preloading pressure for the toothed ring piston is adjusted to a high pressure of approximately 270 bar, the stripping pressure (P2, P3) to a low pressure of approximately 60 bar, the holding pressure (P4) to approximately 270 bar and the guide pressure (P5) to approximately

## Revendications

1. Dispositif permettant d'empêcher le bris d'un outil lors d'une découpe de précision et/ou d'un formage dans une presse (1), avec un chariot, entrainé par un entrainement (4) et réalisant un mouvement de course entre OT et UT, et une tête de découpe de précision (8) agencée au-dessus du chariot (2), qui comporte un cylindre principal (10) dans lequel est accueilli un piston à denture annulaire (11), situé sur l'axe de course (HA), auquel sont associées plusieurs boulons de pression à denture annulaire (14) agencés de manière coaxiale par rapport à l'axe de course (HA), qui sont guidés de manière axiale dans une plaque supérieure (12) fixée sur le cylindre principal (10) et qui s'appuient sur une plaque d'appui à denture annulaire (15) appartenant à la plaque supérieure (12), ladite plaque d'appui formant, avec le piston à denture annulaire (11) et le boulon de pression à denture annulaire (14), un agencement pouvant être déplacé de manière axiale en vue d'une opération de coupe, de formage et d'enlèvement de matière, la tête de découpe de précision (8) étant en liaison avec un système hydraulique (23) afin de produire des pressions agissant sur l'outil par l'intermédiaire de vannes (21, 27, 34, 42) pouvant être commandées grâce à un ordinateur (36), **caractérisé en ce que** la tête supérieure (12) est munie de moyens de serrage hydrauliques (38a à 38d) destinés à maintenir, et de moyens de guidage hydrauliques (43a, 43b) destinés à guider, une plaque interchangeable (48) agencée suspendue au niveau de la plaque supérieure (12), ladite plaque interchangeable est maintenue sans force dans une position finale inférieure (49) par rapport à la plaque supérieure (12) et peut être reliée à, et être à nouveau détachée de, la plaque d'appui à denture annulaire (15) dans une position finale supérieure (59) par verrouillage par friction avec la plaque supérieure (12) en fonction de l'opération d'enlèvement de matière par la grille de découpe, la plaque interchangeable (48) pouvant être transférée de la position finale inférieure (49) vers la position finale supérieure (59) grâce à un déplacement du chariot (2) et de la position finale supérieure (59) vers la position finale inférieure (49) grâce à la pesanteur, et un intervalle de palpation (50) ajusté au parcours de freinage de l'entrainement (4) est prévu entre la plaque supérieure (12) et la plaque interchangeable (48), un dispositif palpeur agencé dans la plaque d'appui à denture annulaire (12) étant associé audit intervalle, ledit dispositif émettant vers l'ordinateur (36) un signal destiné à arrêter l'entrainement (4) et mettre hors tension le système hydraulique (23) par l'intermédiaire d'un capteur (58) agencé dans la plaque supérieure (12) en cas de déplacement temporellement prématuré d'une plaque d'appui (71) agencée dans la plaque interchangeable (48).

2. Dispositif selon la revendication 1, **caractérisé en ce que** les moyens de serrage hydrauliques (38a à 38d) sont raccordés à une alimentation commune (41) grâce à des canaux (40) agencés de manière respectivement séparée dans la plaque supérieure (12), ladite alimentation étant reliée au système hydraulique (23) de la tête de découpe de précision (8) par l'intermédiaire d'une vanne (42) commandée grâce à l'ordinateur (36) en vue d'un serrage ou d'un desserrage du verrouillage par friction entre la plaque supérieure (12) et la plaque interchangeable (48).

3. Dispositif selon la revendication 1 ou 2, **caractérisé en ce que** les moyens de serrage hydrauliques (38a à 38d) sont des vérins-blocs (39) agissant de manière unilatérale avec une course adaptée à l'intervalle de palpation (50).

4. Dispositif selon la revendication 1, **caractérisé en ce que** les moyens de guidage hydrauliques (43a, 43b) sont raccordés à une alimentation commune (46) grâce à des canaux (45) agencés de manière séparée dans la tête supérieure (12), ladite alimentation étant reliée, en vue d'une ouverture et d'une fermeture, à une conduite basse pression (35) du système hydraulique (23a) de la tête de découpe de précision (8) par l'intermédiaire d'une vanne (47) commandée grâce à l'ordinateur (36).

5. Dispositif selon la revendication 1, **caractérisé en ce que** la plaque interchangeable (48) est munie de trous de guidage (51) pour l'accueil et le guidage des moyens de guidage (43a, 43b) agencés au niveau de la plaque supérieure (12) en vue d'une stabilisation de la plaque interchangeable (48) en cas de course à vide dans la position finale supérieure (59) et en cas de redescente dans la position finale inférieure (49).

6. Dispositif selon la revendication 1, **caractérisé en ce que** les moyens de guidage hydrauliques (43a, 43b) sont des vérins à vis (44) avec un parcours de course essentiellement plus grand que l'intervalle de palpation.

7. Dispositif selon la revendication 1, **caractérisé en ce que** la plaque interchangeable (48) comprend une construction en sandwich, dont une partie supérieure (52) est constituée d'acier et une partie inférieure (53) est constituée d'aluminium, la partie supérieure (52) étant munie de rainures (54), dans lesquelles viennent en prise les moyens de serrage (38a à 38d) de la plaque supérieure (12), et la partie inférieure (53) présentant des rainures (56) en vue d'une fixation de la partie supérieure d'outil.

8. Dispositif selon la revendication 1, **caractérisé en ce que** la plaque d'appui à denture annulaire (15) présente une chambre de réception (60) agencée parallèlement à l'axe de course (HA) pour la réception d'une cheville de palpation (57) soumise à une tension de ressort, dont la tête (64) repose sur la plaque d'appui (71) de la plaque interchangeable (48) et qui suit le déplacement de la plaque interchangeable (48) lors d'une course à vide, et qui porte également un disque de mesure (66) au niveau de son pied (65) afin d'enregistrer le déplacement de la plaque interchangeable (38) et de la plaque d'appui à denture annulaire (15), ledit disque de mesure étant associé au capteur (58) agencé dans un évidement (68) horizontal de la plaque supérieure (12), ledit détecteur détectant le mouvement de course, produit par la plaque interchangeable (48), du disque de mesure (66) dans la position finale supérieure (59) de la plaque interchangeable (48) et émettant un signal vers l'ordinateur (36) en vue de la production du verrouillage par friction entre plaque supérieure (12) et plaque interchangeable (48) au moyen du serrage des moyens de serrage (38a à 38d) grâce à la commande de la vanne (42) permettant de déclencher la haute pression issue du système hydraulique (23), lorsqu'une mesure d'intervalle correspondant à la position finale supérieure (59) est atteinte entre le disque de mesure (66) et le capteur (58), le verrouillage par friction entre plaque supérieure (12) et plaque interchangeable (48) étant ensuite desserré grâce à un signal du capteur (58) vers l'ordinateur (36) permettant une mise hors tension du système hydraulique (23), dès que le disque de mesure (66), lors de son déplacement vers l'arrière suite à l'action d'enlèvement de matière, atteint à nouveau la mesure d'intervalle.

9. Dispositif selon la revendication 8, **caractérisé en ce que** le capteur (58) est un capteur de mouvement sans contact, en particulier un capteur d'intervalle à induction.

10. Dispositif selon la revendication 1, **caractérisé en ce que** la chambre de pression (17) pour le cylindre principal (10) est réalisée dans l'élément de tête (6) de la tête de découpe de précision (8), qui est raccordée à l'élément de tête (6) par l'intermédiaire d'un raccord (19) et qui est raccordée à une conduite haute pression (22) du système hydraulique (23) par l'intermédiaire d'une alimentation (20), la chambre de pression (17) pouvant être soumise à une pression de précontrainte et pouvant être commutée en détente grâce à une vanne (21) commandée par l'ordinateur (36) et située dans l'alimentation (20).

11. Dispositif selon la revendication 1, **caractérisé en ce qu'**une première chambre de pression (25) et/ou une deuxième chambre de pression (32) est/sont prévue(s) pour produire la force de denture annulaire, et la première chambre de pression (25) et la deuxième chambre de pression (32) sont prévues pour produire la force d'enlèvement de matière, les chambres de pression (25, 32) pour la force de denture annulaire et la force d'enlèvement de matière étant reliées au système hydraulique (23) par l'intermédiaire de respectivement une vanne (27, 34) commandée par l'ordinateur (36) respectivement à travers des canaux (26, 33) et des alimentations (28) agencés de manière axiale dans le cylindre principal (10).

12. Dispositif selon la revendication 1, **caractérisé en ce que** la chambre de pression (25) associée au piston à denture annulaire (11) est agencée en dessous de la chambre de pression (17) du cylindre principal (10).

13. Dispositif selon la revendication 1, **caractérisé en ce que** la plaque supérieure (12) est agencée sécurisée en rotation et déplaçable axialement grâce à des tiges de guidage (13) guidées dans des alésages de l'élément de tête (6) de manière parallèle à l'axe de course (HA).

14. Dispositif selon la revendication 1, **caractérisé en ce que** le chariot (2) est relié sans engrenages à l'entrainement (4) par l'intermédiaire d'une biellette (3) modifiée, la biellette (3) étant agencée, côté pied sur le bâti de presse (9), en dessous du chariot (2) et de l'entrainement (4).

15. Procédé permettant d'empêcher le bris d'un outil lors d'une découpe de précision et/ou d'un formage dans une presse (1) entrainée grâce à un entrainement (4) par l'intermédiaire d'une biellette (3) modifiée, avec un dispositif selon la revendication 1, dans lequel le piston à denture annulaire (11), le boulon de pression à denture annulaire (14) et la plaque d'appui à denture annulaire (15) guidés dans le cylindre principal (10) et la plaque supérieure (12) de la tête de découpe de précision (8) sont soumis à une pression réglable issue d'un système hydraulique (23) pour appliquer une force de denture annulaire et une force d'enlèvement de matière, les pressions individuelles étant commandées par l'intermédiaire de vannes (21, 27, 34, 42) ajustées grâce à un ordinateur (36), **caractérisé en ce que**, entre la plaque supérieure (12) et une plaque interchangeable (48) guidée sans force au niveau de la plaque supérieure (12), est ajusté un intervalle de palpation (50) adapté au parcours de freinage de l'entrainement (4), une modification dudit intervalle étant enregistrée par un dispositif palpeur (57, 66) et un capteur (58) grâce à un déplacement, temporellement prématuré et dépendant du chariot, d'une plaque d'appui (71) agencée dans la plaque interchangeable (48), ladite modification étant transformée en un signal et réacheminée vers l'ordinateur (36) en vue de l'arrêt immédiat de l'entrainement (4) et de la mise hors tension du système hydraulique (23).

16. Procédé selon la revendication 15, **caractérisé par** les étapes suivantes consistant à :
a) enregistrer la position de la plaque d'appui à denture annulaire (15) dans une butée de fin de course inférieure (49a) grâce au dispositif palpeur comprenant une cheville de palpation (57) soumise à une tension de ressort, un capteur (58) et un disque de mesure (66) et
étalonner ladite position en tant que point zéro dans l'ordinateur (36),
b) accoupler la plaque interchangeable (48) contenant la plaque d'appui (71) à la plaque supérieure (12) portant la plaque d'appui à denture annulaire (15), presser la cheville de palpation (57) sur la plaque d'appui (71), enregistrer ladite position en tant que position finale inférieure (49) de la plaque interchangeable (48) grâce au disque de mesure (66) et transférer ladite position vers l'ordinateur (36) en tant que position de comparaison,
c) mettre en oeuvre un mouvement de course de la plaque interchangeable (48) à partir de la position finale inférieure (49) jusqu'à une position finale supérieure (59) sur la plaque supérieure (12) grâce au chariot (2) de la biellette (3),
d) enregistrer les positions de course de la plaque d'appui (71) pendant le mouvement de course de la plaque interchangeable (48) grâce au disque de mesure (66) et mettre hors tension l'entrainement (4) et le système hydraulique lorsque la comparaison, effectuée grâce à l'ordinateur (36), de la position réelle déterminée par le dispositif palpeur avec la position de comparaison selon l'étape b) détermine un déplacement prématuré de la plaque d'appui (71),
e) enregistrer la position finale supérieure (59) de la plaque interchangeable (48) grâce au disque de mesure (66) et émettre un signal vers l'ordinateur (36) en vue de la commutation du système hydraulique (23) aux moyens de tension hydrauliques (38a à 38b) de la plaque supérieure (12), dans la mesure où aucun déplacement prématuré de la plaque de pression (71) n'est constaté par le disque de mesure (66),
f) produire un verrouillage par friction entre plaque supérieure (12) et plaque interchangeable (48) dans la position finale supérieure (59) grâce aux moyens de tension hydrauliques (38a à 38d) sur la plaque supérieure (12) au moyen d'une pression de retenue (P4) issue du système hydraulique (23) et déplacer la plaque d'appui à denture annulaire (15) dans la direction OT en vue d'un enlèvement de matière par la grille de découpe,
g) mettre en oeuvre une alimentation de pression du piston à denture annulaire (11) en vue d'un enlèvement de matière par la grille de découpe avec la plaque d'appui à denture annulaire (15) dans la direction UT,
h) maintenir la plaque supérieure (12) et la plaque interchangeable (48) dans un état de verrouillage par friction jusqu'à ce que le disque de mesure (66) détecte la fin de l'action d'enlèvement de matière et le capteur (58) émette un signal vers l'ordinateur (36) en vue d'un desserrage de la plaque interchangeable (48),
i) desserrer le verrouillage par friction entre plaque supérieure (12) et plaque interchangeable (48) grâce à un arrêt, par l'intermédiaire de l'ordinateur (36), de la pression du système hydraulique (23) agissant sur les moyens de tension hydrauliques (38a à 38d) et laisser retomber la plaque interchangeable (48) desserrée dans sa position finale inférieure (49) grâce à la pesanteur et,
j) répéter les étapes a) à c) et e) à h), dans la mesure où le dispositif palpeur n'a détecté aucun déplacement prématuré de la plaque interchangeable (48) après l'étape d).

17. Procédé selon la revendication 16, **caractérisé en ce que** la force de retenue produite par la pression de retenue (P4) en vue du verrouillage par friction entre plaque supérieure (12) et plaque interchangeable (48) est ajustée à une valeur qui est sensiblement supérieure à la force d'enlèvement de matière produite par la pression d'enlèvement de matière (P2, P3).

18. Procédé selon la revendication 16, **caractérisé en ce que** la pression de précontrainte pour le piston à denture annulaire est ajustée à une haute pression d'environ 270 bars, la pression d'enlèvement de matière (P2, P3) est ajustée à une basse pression d'environ 60 bars, la pression de retenue (P4) est ajustée à environ 270 bars et la pression de guidage (P5) est ajustée à environ 60 bars.
